# EUROPEAN PATENT SPECIFICATION

(11) **EP 4 415 375 B1**
(45) Date of publication and mention of the grant of the patent: **24.12.2025**
(21) Application number: 23155864.4
(22) Date of filing: 09.02.2023
(51) Int. Cl.: H04N 25/47

(54) **EVENT SENSOR AND METHOD FOR PRODUCING A DATA STREAM OF EVENT DATA**
EREIGNISSENSOR UND VERFAHREN ZUM ERZEUGEN EINES DATENSTROMS VON EREIGNISDATEN
CAPTEUR D'ÉVÉNEMENT ET PROCÉDÉ DE PRODUCTION D'UN FLUX DE DONNÉES D'ÉVÉNEMENT

(43) Date of publication of application: 14.08.2024
(73) Proprietor: IniVation AG, 8050 Zürich (CH)
(72) Inventor: Li, Chenghan, 8051 Zürich (CH); Georgiou, Andreas, 8051 Zürich (CH)
(74) Representative: Adares PartGmbB

(56) References cited:
- US-A- 5 838 391
- US-A1- 2004 258 158
- US-A1- 2012 257 789

## Description

The invention relates to an event sensor and a method for producing a data stream of event data in reaction to light incident on a pixel array.

In some machine vision tasks, such as tracking, localization and detection of moving objects, it is desirable for the machine vision algorithm to receive an input with a high temporal resolution and a minimum latency. For such machine vision tasks, it is also undesirable to receive and process a large amount of redundant or irrelevant information. Therefore, such machine vision tasks demand a smart image sensor that has a high temporal resolution, a low latency, and a low data redundancy.

An unconventional sensor design, which encodes temporal contrast of the scene captured by its photosensors, is proposed in US 7,728,269 B2. By encoding a temporal contrast, temporal redundancy in the output data of the image sensor is almost eliminated, thereby producing activity-driven sparse data in the format of polarity events. This means that each polarity event consists of a polarity, i.e. a sign of the temporal contrast, and pixel coordinates. Such an event-based temporal contrast sensor concept, also known as an event sensor concept, provides a unique combination of advantages not offered by the conventional image sensors: a high dynamic range, a high temporal resolution, a low latency, and a low data redundancy. Hence, the event sensor concept has been adopted in numerous alternative or improved designs and is also the basis of the present invention.

The polarity events may be encoded per individual pixel, where the polarity event contains the polarity as well as the coordinates of the pixel. Alternatively, to improve event throughput given a limited output speed capability, the polarity events may be encoded per group of adjacent pixels, where the polarity event contains the polarities as well as the coordinates of the group of the pixels.

The patent application US 2012/257789 A1 discloses an event sensor in which the pixels are divided in pixel blocks. Each block is connected to a spatiotemporal correlator. Pixels blocks with high correlation are grouped in a block cluster. The block cluster is analysed to determine object motion and trajectory. For a small movement, the movement trajectory is tracked, and for large movement, the direction of the movement is determined. An output to a user interface is produced depending on the motion.

The design proposed in US 7,728,269 B2 utilizes subthreshold MOSFET behavior for a logarithmic current-to-voltage conversion to achieve a high dynamic range. Because the temporal contrast is measured instead of an absolute intensity, this design is immune to an inter-pixel offset mismatch in the logarithmic current-to-voltage conversion. However, this design still suffers from an inter-pixel gain mismatch in the logarithmic current-to-voltage conversion as well as a change detection step. Besides, this design uses a storage capacitor to store a past light-intensity-dependent signal, which is prone to various leakages that cause a leakage-induced inaccuracy in the polarity events.

An improved event sensor is described in EP 4 064 686 A1. The known event sensor, which produces a stream of event data in reaction to light incident on a pixel array comprises for each pixel of said pixel array at least one photodetector configured to produce a detector signal in reaction to light incident on said pixel. For each pixel, or a group of said pixels, the event sensor comprises a signal converter connected to said photodetector and configured to repeatedly produce and store sample values dependent on said detector signal sampled at sampling intervals. Furthermore, the event sensor comprises a readout processor connected to said signal converter(s) and configured to derive an accumulated pixel value based on one or multiple of said sample values, wherein said accumulated pixel value corresponds to an accumulation of said detector signal over an interval count of said sampling intervals, and to generate a pixel event of said event data dependent on said accumulated pixel value and said interval count.

Furthermore, the event sensor introduced in EP 4 064 686 A1 may produce not only polarity events, but also advanced events. The advanced events may contain not only (a) sign(s) but also (a) magnitude(s) of a temporal contrast, a temporal difference, a spatial contrast, a spatial difference and/ or an absolute intensity. Comparing to the polarity events, which encode a visual input in a lossy fashion, the advanced events can encode the visual input in a lossless fashion, hence can better support more demanding visual tasks such as object identification and recognition.

However, the additional information carried by the advanced events also require more bits to encode and communicate. Hence, the advanced events put a higher strain on the output speed capability of the event sensor, which may become a performance bottleneck when the event sensor packs a high number of pixels, i.e. has a high spatial resolution, and/ or operates at a high speed, i.e. has a high temporal resolution, and/ or when the visual input generates many events in a short time. To meet an increasing performance requirement of modern vision systems, there is an unmet need for an event sensor that can encode the visual input not only in a lossless fashion, but also in an efficient fashion, such that the number of bits required to encode information from each pixel is minimized.

This need is met according to the present invention by providing, in a first aspect of the invention, an event sensor with the features of claim 1 and the method with the features of claim 16. Further advantageous embodiments of the invention are subjects of the dependent claims.

The present invention is based on a sensor architecture as described in EP 4 064 686 A1. The event sensor comprises a pixel array of pixels and is configured to produce a data stream of event data in reaction to light incident on the pixel array, wherein the pixels of the pixel array are divided into pixel blocks, each pixel block comprising two or more pixels of the pixel array. The event sensor comprises: for each pixel of the pixel array at least one photodetector configured to produce a detector signal in reaction to light incident on the pixel; and for each pixel or a group of the pixels a signal converter connected to the photodetector and configured to repeatedly produce and store sample values dependent on the detector signal sampled at sampling intervals.

The expression "light" can refer to electromagnetic radiation of any wavelength. In an advantageous embodiment, "light" may refer to wavelengths ranging between and including ultraviolet and near-infrared. Therefore, the expressions" light" and " EM radiation" may be used interchangeably herein.

The pixel array may comprise a two-dimensional array of W times H pixels, where W and H are both positive integers, W will be called a width number, referring to the number of the pixels along a first dimension and H will be called a height number, referring to the number of the pixels along a second dimension perpendicular to the first dimension. The pixel array may also be referred to as having W columns of H pixels, H rows of W pixels, and/ or W columns and H rows of the pixels.

Each pixel of the pixel array comprises at least one photodetector that produces the detector signal in reaction to light incident on the pixel. The photodetector may be any device that converts incident light, i.e. incident photons, into the detector signal. The detector signal may be any form of signal dependent on the incident light, such as a thermal signal or a biochemical signal.

The detector signal may in particular be an electrical signal. In this case, the photodetector may be called a photoelectric converter. The photodetector may perform a photon-to-electron conversion. The photodetector may be a photodiode, in particular a partially or fully pinned photodiode (PPD). The photodetector may be in particular configured to generate an electric charge at a rate, where the rate at which the electric charge is generated, i.e. the amount of charge generated in a unit time, is the detector signal. Therefore, the detector signal may be linearly dependent on, or proportional to, the intensity of the light impinging on the photodetector. The detector signal may in particular be sampled following each unit time, i.e. at the sampling intervals, where each unit time or sampling interval contains an exposure of the photodetector. In other words, within each sampling interval, the photodetector may be exposed for a predetermined exposure time, and then the detector signal may be sampled. Therefore, within each sampling interval, there may be one exposure of the photodetector followed by one sampling of the detector signal. The exposure time may in particular be regular. Because the intensity of the light impinging on the photodetector may vary with time, the detector signal may also vary with time. In other words, the detector signal sampled at one point in time may differ from the detector signal sampled at another point in time. However, the detector signal should not be regarded as being duplicated into multiple such detector signals by being sampled at multiple different points in time. The detector signal from one photodetector is described herein as a single time-varying quality that can be sampled repeatedly over time.

In one embodiment, for each pixel, the signal converter is connected to the photodetector(s) of the pixel. In other words, there is a one-to-one correspondence between each pixel and one signal converter. Alternatively, a group of multiple pixels may share one common signal converter. In other words, multiple photodetectors belonging to multiple pixels may be connected to one single signal converter.

The signal converter is configured to repeatedly sample the detector signal at the sampling intervals, and to repeatedly produce and store the sample values dependent on the detector signal sampled at the sampling intervals. Each sample value is dependent on, in particular linearly dependent on, or proportional to, the detector signal sampled at the corresponding sampling interval.

Furthermore, the present invention is based on a readout processor that is configured to operate on the pixel blocks that are defined in the pixel array. The pixels of the pixel array are thus divided into the pixel blocks, each pixel block comprising two or more pixels, preferably at least four, nine, or 16 pixels of the pixel array. The pixel block is a proper subset of the pixel array, so the pixel array is divided into multiple of the pixel blocks. Furthermore, advantageously, all the pixel blocks are geometrically identical and are located in such a way that any pixel block can geometrically coincide with any other pixel block via translation only. For example, the pixel block may contain 4 rows by 4 columns of the pixels. The pixels of the same pixel block may be adjacent or contiguous to each other, or may be separated by the pixels belonging to other pixel block(s). The definition of the pixel blocks may be performed once at an initiation process, and/ or the pixel blocks may be redefined during a readout process. Alternatively, the definition of the pixel blocks may be predetermined, i.e. hardcoded or hardwired.

The readout processor is connected to the signal converter and is configured to derive, for each pixel of the pixel block, an accumulated pixel value based on one or multiple of the sample values, wherein the accumulated pixel value corresponds to an accumulation of the detector signal over an interval count of the sampling intervals, and the interval count records the number of the sampling intervals, or the exposures, that the detector signal is accumulated or integrated over within the accumulation.

The sample values and the accumulated pixel value are produced, derived and stored in a digital, i.e. binary or base-2, form. Furthermore, as explained in EP 4 064 686 A1, the accumulation can be performed in an analog domain, in a digital domain or in a mixed domain, it should be noted that all the three approaches will ultimately result in an accumulated pixel value in the digital form.

In an advantageous embodiment, the accumulation may be described as a digital domain accumulation, i.e. the accumulation takes place purely in the digital domain, when multiple of the sample values, each corresponding to the detector signal generated within one single sampling interval, are combined in the digital domain, e.g. by summation, to derive the accumulated pixel value.

During the digital domain accumulation, the interval count is updated by incrementing the interval count for each sampling interval of the accumulation, and the accumulated pixel value is also updated, namely by adding the sample value from each sampling interval of the accumulation to the accumulated pixel value. Both the interval count and the accumulated pixel value may be reset or re-started at the start of a new accumulation.

While the interval count is defined for each individual pixel, the interval count of every pixel within the pixel block is identical. In other words, the interval count could be defined for each pixel individually, or for each pixel block. As a result, all pixels in the same pixel block start and end the accumulation together at the same time synchronously, hence the corresponding accumulated pixel values of all pixels in the same pixel block are produced and subsequently processed together in one batch at the same time.

The readout processor is configured to further derive, for the pixel block, an accumulated block value based on the accumulated pixel values of the pixels in the pixel block. In particular, the accumulated block value may be derived by various methods applied to the accumulated pixel values of the pixels in the pixel block. The accumulated block value may for example be an arithmetic mean (sum of values, divided by number of values), a median (middle value separating the greater and lesser halves of all values), a mode (most frequent value), or a mid-range (arithmetic mean of the highest and lowest values) of the accumulated pixel values of the pixels in the pixel block. Thus, the accumulated block value may be a mean accumulated pixel value, a median accumulated pixel value, a mode accumulated pixel value or a mid-range accumulated pixel value of the accumulated pixel values of the pixels in the pixel block.

The readout processor may then perform, for the pixel block, at each sampling interval during the accumulation, an accumulation-end-check by comparing the accumulated block value against an accumulated block value threshold, and/ or by comparing the interval count against a count threshold. When the accumulated block value exceeds the accumulated block value threshold, and/ or the interval count exceeds the count threshold for the pixel block, i.e. an accumulation-end condition is fulfilled, the readout processor will end the accumulation for the pixel block and subsequently perform a processing iteration on the pixels of the pixel block. On the other hand, when the accumulation-end condition is not fulfilled, the readout processor will allow the accumulation to continue for the pixel block and not perform the processing iteration on the pixels of the pixel block. In other words, the readout processor is configured to perform one processing iteration after the end of each accumulation for every pixel block. Therefore, for every pixel block, there is a one-to-one correspondence between one accumulation and one processing iteration, i.e. each accumulation corresponds to one processing iteration and each processing iteration corresponds to one accumulation.

The "and/or" alternatives described in the previous paragraph and in the claims can either mean that only the accumulated block value is compared to the accumulated block value threshold, or that only the interval count is compared to the count threshold, or that both of these comparisons take place. In the latter case, the condition can be determined to be met when the accumulated block value exceeds the accumulated block value threshold, when the interval count exceeds the count threshold, or when both thresholds are exceeded. In this case, the "or" in the claim language is a Boolean "or". Alternatively, the "or" in the claim language may represent a patent language "or", which means that the readout processor may be configured to only examine whether the accumulated block value exceeds the accumulated block value threshold OR to only examine whether the interval count exceeds the count threshold. This may apply to other instances of the use of "and/ or" as well, meaning that the " or" in this expression may be regarded as Boolean operators or as a way of distinguishing two different embodiments.

According to the present invention, each processing iteration is made of the following stepsd, f1, f2, f3, and f4 performed on the pixels of the pixel block. The numbering of the steps is just for purposes of easy comprehension and reference and does not necessarily describe the order in which the steps are performed.

Step d: determine, for the pixel block, an accumulated block value threshold and/ or a count threshold for a subsequent accumulation. The accumulated block value threshold and/ or the count threshold are/ is advantageously determined based on the interval count and the accumulated block value, in particular, based on a block division result of dividing the accumulated block value by the interval count.

Here and in the following, for clarity, a processing iteration being performed presently on the pixel block is called a " current processing iteration" , or simply a "processing iteration". A processing iteration performed immediately before the current processing iteration on the same pixel block is called a "previous processing iteration". An accumulation corresponding to the current processing iteration is called a " current accumulation", or simply an "accumulation". A "subsequent accumulation" refers to a new accumulation that takes place at the same pixel block after the current accumulation has ended. This also means that the accumulated block value threshold and/ or the count threshold used by the readout processor to perform the accumulation-end-check during the current accumulation have/ has been determined during the previous processing iteration. Therefore, for every pixel block, there is also a one-to-one correspondence between one current accumulation and one current processing iteration, i.e. each current accumulation corresponds to one current processing iteration and each current processing iteration corresponds to one current accumulation.

Advantageously, the event sensor of the present invention may comprise a parameter memory connected to the readout processor and configured to store, for each pixel of the pixel array, the accumulated pixel value, a previous accumulated pixel value and a previous interval count, and for each pixel block of the pixel array, the interval count.

Here and in the following, for clarity, an accumulation, which has taken place before the current accumulation at the same pixel block, and a corresponding processing iteration of which has produced an event constituting the event data, is called a " previous accumulation". Thus, a "previous accumulated pixel value" and a "previous interval count" refer respectively to an accumulated pixel value and a corresponding interval count derived from, i.e. at the end of, the previous accumulation. It is worth mentioning that, the previous accumulated pixel value, the previous interval count and the previous accumulation do not necessarily correspond to the previous processing iteration, because the previous accumulation may not necessarily have taken place immediately before the current accumulation. On the other hand, an accumulated pixel value and a corresponding interval count derived at the end of the current accumulation may respectively be referred to herein as a "current accumulated pixel value" and a "current interval count", or simply as an "accumulated pixel value" and an "interval count".

At each sampling interval during the accumulation, the readout processor may read the sample value from the signal converter, read the accumulated pixel value and the interval count from the parameter memory, update the accumulated pixel value and the interval count accordingly, and then write the updated accumulated pixel value and the updated interval count back to the parameter memory.

Furthermore, the parameter memory may be configured to store, for each pixel block of the pixel array, the accumulated block value threshold and/ or the count threshold.

During a current processing iteration, the readout processor may determine and store in the parameter memory an accumulated block value threshold and/ or a count threshold for a subsequent accumulation. In other words, at each sampling interval during a current accumulation, for the purpose of performing the accumulation-end-check, the readout processor may read from the parameter memory an accumulated block value threshold and/ or a count threshold that are/ is determined and stored during a previous processing iteration.

The parameter memory may be physically one memory device in one location, or distributed over multiple memory devices in multiple locations. Although this is a preferred option, the parameter memory does not have to be arranged in an array as is the pixel array. The parameter memory may in particular be based on SRAM technology.

According to an advantageous embodiment, the event sensor may further comprise a threshold memory connected to the readout processor. The threshold memory may be configured to store a first lookup table. The content of the first lookup table may be precomputed and prestored in the threshold memory. The first lookup table may in particular receive from the readout processor the block division result as an input, and produce to the readout processor the accumulated block value threshold and/ or the count threshold as (an) output(s), thus allowing the redout processor to determine, for the pixel block, the accumulated block value threshold and/ or the count threshold for the subsequent accumulation based on the block division result.

It should be noted that storing of any parameter or value described herein may encompass not only storing the parameter or value in the original form as the parameter or value is derived or produced, but also the possibility of storing the parameter or value in a different, encoded form, such as Gray code or a compressed code. Furthermore, reading of any parameter or value by the readout processor described herein may encompass an automatic conversion or decoding step where needed.

Step f1: Define a search region comprising a number of pixels that is equal to or larger than the number of pixels in the pixel block and comprising the pixel block, such that the search region contains one or more candidate block(s), wherein each candidate block comprises the same number of pixels as the pixel block does and is geometrically identical to the pixel block such that the candidate block can coincide geometrically with the pixel block via translation only, the pixel block itself also being a candidate block. Advantageously, the search region extends beyond the pixel block on at least one side or on all sides. The search region may be centered around the pixel block, such that the search region extends beyond the edges of the pixel block symmetrically. The candidate block may be assembled by actual pixels, or formed by interpolated pixels, i.e. by virtual pixels which lie geometrically between the actual pixels and the values of which are calculated or interpolated based on the values of the actual pixels.

Step f2): Perform an evaluation procedure for each candidate block with respect to the pixel block, to calculate a cost function result for each candidate block. In other words, the cost function result depends on the candidate block and the pixel block. The evaluation procedure comprises the following steps:
i) For each pixel of the candidate block, read the previous accumulated pixel value and the previous interval count from the parameter memory;
ii) For each pixel of the pixel block and a corresponding pixel of the candidate block, determine at least one contrast threshold and/ or at least one difference threshold based on the accumulated pixel value of the pixel, the previous accumulated pixel value of the corresponding pixel, the interval count of the pixel and/ or the previous interval count of the corresponding pixel;
iii) For each pixel of the pixel block and a corresponding pixel of the candidate block, calculate one, two or three of the following three values: a spatiotemporal contrast, a spatiotemporal difference, and a communication cost; and
iv) Calculate the cost function result for the candidate block based on the spatiotemporal contrasts, the spatiotemporal differences, the communication costs and/ or a displacement between the pixel block and the candidate block.

Here and in the following, each pixel of the pixel block and a corresponding pixel of the candidate block are geometrically corresponding to each other. In other words, the pixel of the pixel block and the corresponding pixel of the candidate block have the same relative position with reference to the pixel block and the candidate block respectively. For example, the pixel of the pixel block may be at the top left corner of the pixel block, in which case the corresponding pixel of the candidate block is also at the top left corner of the candidate block. Each pixel of the pixel block and a corresponding pixel of the candidate block are associated with a spatiotemporal contrast, a spatiotemporal difference, and/ or a communication cost. Each candidate block is associated with a cost function result.

Advantageously, the threshold memory may be configured to further store a second lookup table. The content of the second lookup table may be precomputed and prestored in the threshold memory. The second lookup table may in particular receive from the readout processor the accumulated pixel value, the previous accumulated pixel value, the interval count and/ or the previous interval count as (an) input(s), and produce to the readout processor at least one contrast threshold and/ or at least one difference threshold as (an) output(s), thus allowing the redout processor to determine, for each pixel of the pixel block and a corresponding pixel of the candidate block, the contrast threshold(s) and/ or the difference threshold(s) based on the accumulated pixel value of the pixel, the previous accumulated pixel value of the corresponding pixel, the interval count of the pixel and/ or the previous interval count of the corresponding pixel.

The spatiotemporal contrast between each pixel of the pixel block and a corresponding pixel of the candidate block is calculated based on, i.e. linearly dependent on or equal to, a quotient of a division result of the pixel and a previous division result of the corresponding pixel, wherein the division result of the pixel is calculated by dividing the accumulated pixel value of the pixel by the interval count of the pixel, and the previous division result of the corresponding pixel is calculated by dividing the previous accumulated pixel value of the corresponding pixel by the previous interval count of the corresponding pixel. As an advantageous example, the spatiotemporal contrast may be calculated as subtracting one from said quotient, i.e. said quotient minus one.

The spatiotemporal difference between each pixel of the pixel block and a corresponding pixel of the candidate block is calculated based on, i.e. linearly dependent on or equal to, a difference between the division result of the pixel and the previous division result of the corresponding pixel. As an advantageous example, the spatiotemporal difference may be calculated as said difference.

The communication cost associated with each pixel of the pixel block and a corresponding pixel of the candidate block is calculated based on, i.e. linearly dependent on or equal to, an amount of data, i.e. a number of bits or data packets, required to encode and/ or communicate a comparison result of comparing the spatiotemporal contrast between the pixel and the corresponding pixel against the contrast threshold(s) and/ or comparing the spatiotemporal difference between the pixel and the corresponding pixel against the difference threshold(s). As an advantageous example, the communication cost may be calculated as said amount of data. Each communication cost is thus corresponding to a comparison result, both of which also correspond to a spatiotemporal contrast and/ or a spatiotemporal difference that are/ is associated with a pixel of the pixel block and a corresponding pixel of the candidate block.

Step f3: Find a best matching block among the candidate block(s) based on the cost function result, such that the best matching block is the candidate block associated with the lowest cost function result.

Step f4: Generate an event of the event data based on a displacement between the best matching block and the pixel block and/ or the comparison results associated with the best matching block.

Advantageously, if the best matching block is identical to the pixel block, i.e. the associated comparison results are all zero, then it could suffice to encode and communicate as part of the event data only the displacement, i.e. without the comparison results. If there is a mismatch or residue difference between the best matching block and the pixel block, i.e. the associated comparison results are not all zero, then this residue difference, i.e. the non-zero comparison result(s), may be encoded and communicated as part of the event data as well. Furthermore, if the best matching block at the same position in the pixel array as the pixel block, i.e. the associated displacement is zero, then it could suffice to encode and communicate as part of the event data only the non-zero comparison result(s) if any, i.e. without the displacement. Lastly, if the best matching block is identical to the pixel block and is at the same position in the pixel array as the pixel block, then no event would be generated from this pixel block.

According to an advantageous embodiment, the readout processor is configured to calculate the cost function result based on: a sum/ mean of absolute/ squared value of the spatiotemporal contrast/ difference between each pixel of the pixel block and a corresponding pixel of the candidate block, a sum/ mean of the communication cost associated with each pixel of the pixel block and a corresponding pixel of the candidate block, a weighted sum/ mean of absolute/ squared value of the spatiotemporal contrast/ difference between each pixel of the pixel block and a corresponding pixel of the candidate block, where the absolute/ squared value of the spatiotemporal contrast/ difference is weighted by the corresponding communication cost associated with the pixel and the corresponding pixel, and/ or whether the displacement between the pixel block and the candidate block is zero or not, i.e. whether the displacement needs to be encoded and communicated as part of the event data. Here the operator "/" is an abbreviation for "or", such that " sum/ mean" is a short form for " sum or mean" , "absolute/ squared" is short form for "absolute or squared" and "contrast/ difference" is short for "contrast or difference" .

Advantageously, the readout processor is configured to terminate the evaluation procedure early, i.e. before the evaluation procedure is performed for every candidate block in the search region, when a perfect matching block is found, wherein the cost function result associated with the perfect matching block is lower than a pre-determined threshold.

In a second aspect of the invention, an event sensor with the features of independent claim 13 is provided. It contains all the features of the event sensor as described above, with the modification that the steps f1 to f4 have been replaced with steps g1 to g4. In this second aspect, the readout processor is configured to perform, instead of the steps f1 to f4, the following steps g1 to g4.

Step g1: For each pixel of the pixel block, read the previous accumulated pixel value and the previous interval count from the parameter memory.

Step g2: For each pixel of the pixel block, determine at least one contrast threshold, at least one difference threshold and/ or at least one intensity value threshold based on the accumulated pixel value, the previous accumulated pixel value, the interval count, and/ or the previous interval count of the pixel.

Step g3: Calculate a temporal contrast, a temporal difference, an intensity value and/ or a communication cost for each pixel of the pixel block.

The readout processor may determine, for each pixel of the pixel block, the contrast threshold(s) and/ or the difference threshold(s) using the second lookup table as described previously, with the accumulated pixel value, the previous accumulated pixel value, the interval count, and/ or the previous interval count of the pixel as the input(s) to the second lookup table. On the other hand, advantageously, the intensity value threshold(s) may be determined using a third lookup table stored in the threshold memory. The third lookup table may be configured similarly as the second lookup table but with the difference of producing to the readout processor at least one intensity value threshold as (an) output(s).

The temporal contrast of each pixel is calculated based on, i.e. linearly dependent on or equal to, a quotient of a division result and a previous division result of the pixel, wherein the division result is calculated by dividing the accumulated pixel value of the pixel by the interval count of the pixel, and the previous division result is calculated by dividing the previous accumulated pixel value of the pixel by the previous interval count of the pixel. As an advantageous example, the temporal contrast may be calculated as subtracting one from said quotient, i.e. said quotient minus one.

The temporal difference of each pixel is calculated based on, i.e. linearly dependent on or equal to, a difference between the division result and the previous division result of the pixel. As an advantageous example, the temporal difference may be calculated as said difference.

The intensity value of each pixel is calculated based on, i.e. linearly dependent on or equal to, the division result and/ or the previous division result of the pixel. As an advantageous example, the intensity value may be calculated as the division result, or an average of the division result and the previous division result.

According to the second aspect of the invention, the communication cost of each pixel is calculated based on, i.e. linearly dependent on or equal to, an amount of data, i.e. a number of bits or data packets, required to encode a comparison result of comparing the temporal contrast of the pixel against the contrast threshold(s), comparing the temporal difference of the pixel against the difference threshold(s) and/ or comparing the intensity value of the pixel against the intensity value threshold(s). As an advantageous example, the communication cost may be calculated as said amount of data. Each communication cost is thus corresponding to a comparison result that is associated with a pixel of the pixel block.

Step g4: Generate an event of the event data based on the comparison results of comparing the temporal contrast of each pixel of the pixel block against the contrast threshold(s), comparing the temporal difference of each pixel of the pixel block against the difference threshold(s) and/ or comparing the intensity value of each pixel of the pixel block against the intensity value threshold(s).

Here and in the following, unless specified otherwise, all features described are applicable to both the two aspects of the invention.

Preferably, for both the two aspects of the invention, the readout processor is configured to: for each pixel block, find a mode comparison result, i.e. a most frequent comparison result, among the comparison results of the pixels in the pixel block; for each pixel block find outlier comparison result(s) that differ(s) from the mode comparison result; and generate the event of the event data based on the mode comparison result and/ or the outlier comparison result(s).

Advantageously, in particular in the first aspect of the invention, during the evaluation procedure, the readout processor may be configured to calculate the cost function result based on the mode comparison result and/ or the outlier comparison result(s). In particular, when calculating the sum/ mean of the communication cost associated with each pixel of the pixel block and a corresponding pixel of the candidate block, the communication cost corresponding to the mode comparison result may only be taken into account once, because the mode comparison result would only be encoded and communicated once in the event data.

In a further preferred embodiment, the readout processor is configured to find the mode comparison result based on: a frequency of occurrence of the comparison result(s) that share(s) a common value; and/ or a weighted frequency of occurrence of the comparison result(s) that share(s) a common value, where the weighted frequency of occurrence is weighted by the corresponding communication cost required to encode and/ or communicate the comparison result with the common value.

The features described above in the two aspects of the invention aim to address two most common scenarios where the visual input to an event sensor may generate many events in a short time.

In a fist scenario, there is a relative movement between an event sensor and an object constituting a portion of the visual input to the event sensor. In this scenario, a prior art event sensor would perceive all spatial features of the object as temporal contrasts/ differences and produce temporal contrast/ difference induced events. However, because these temporal contrast/ difference induced events are all results of the same relative movement, rather than encoding and communicating these temporal contrast/ difference induced events individually, it would be more efficient to encode and communicate the relative movement itself. Therefore, by finding the best matching block for each pixel block, the readout processor according to the features specified above searches for the best matching block to estimate the relative movement and uses the displacement between the pixel block and the best matching block to encode the estimated relative movement and generate the event data accordingly.

In a second scenario, there is a uniform change in illumination on an object constituting a portion of the visual input to an event sensor. In this scenario, a prior art event sensor would perceive the entire area of the object that reflects the uniform change in illumination as an area that presents temporal contrast/ difference and produce temporal contrast/ difference induced events from all pixels that receive light from the area. However, because these temporal contrast/ difference induced events are all results of the same uniform change in illumination, many of these temporal contrast/ difference induced events may encode identical comparison results associated with the temporal contrast/ difference. Therefore, by finding the mode comparison result for each pixel block, the readout processor according to the features specified above may encode and communicate the mode comparison result shared by multiple pixels as one comparison result in the event data, instead of encoding and communicating the same comparison result shared by multiple pixels individually multiple times.

By definition, the temporal contrast described in the second aspect of the invention may be seen as a special case of the spatiotemporal contrast described in the first aspect of the invention, and the temporal difference described in the second aspect of the invention may be seen as a special case of a spatiotemporal difference described in the first aspect of the invention. Therefore, for simplicity, in the following, a "spatiotemporal contrast" can in specific embodiments of the first aspect of the invention mean the spatiotemporal contrast, or in specific embodiments of the second aspect of the invention mean the temporal contrast. Likewise, a " spatiotemporal difference" may in specific embodiments of the first aspect of the invention mean the spatiotemporal difference, or in specific embodiments of the second aspect of the invention mean the temporal difference.

Advantageously, the readout processor is configured to specify the comparison result related to the spatiotemporal contrast and/ or the spatiotemporal difference to be:
- zero, if the spatiotemporal contrast does not exceed the contrast threshold(s) and/ or the spatiotemporal difference does not exceed the difference threshold(s), in order to minimize noise in the event data;
- containing a part that is linearly dependent on or equal to the spatiotemporal contrast and/ or the spatiotemporal difference, if the spatiotemporal contrast exceeds the contrast threshold(s) and/ or the spatiotemporal difference exceeds the difference threshold(s), and if the spatiotemporal contrast is within a contrast range/ limit and/ or the spatiotemporal difference is within a difference range/ limit;
- containing a part that is linearly dependent on or equal to the division result of the pixel of the pixel block, if the spatiotemporal contrast exceeds the contrast range/ limit and/ or the spatiotemporal difference exceeds the difference range/ limit.

Here, the contrast range/ limit and/ or the difference range/ limit are/ is predetermined based on the encoding capacity of the event data, e.g. the size of data packets. Preferably, when the comparison result is not zero, the comparison result may further contain an indicator that indicates whether the comparison result contains a part that is linearly dependent on or equal to the spatiotemporal contrast and/ or the spatiotemporal difference, or contains a part that is linearly dependent on or equal to the division result.

According to a preferred embodiment, when the comparison result contains a part that is linearly dependent on or equal to the spatiotemporal contrast and/ or the spatiotemporal difference, the readout processor is configured to quantize the part of the comparison result such that the part of the comparison result after quantization may be encoded and/ or communicated with a smaller number of bits or a smaller number of data packets than a part of a comparison result that is linearly dependent on or equal to the division result of the pixel. This way, the event data may be compressed without information loss, because the spatiotemporal contrast and/ or the spatiotemporal difference typically fall(s) within a smaller range than the division result of the pixel.

According to an advantageous embodiment, when the comparison result contains a part that is linearly dependent on or equal to the spatiotemporal difference or the temporal difference, the readout processor is configured to quantize the part of the comparison result with a step size, i.e. least significant bit value, that is approximately proportional to the previous division result of the corresponding pixel of the best matching block or the previous division result of the pixel.

In particular, the comparison result may be quantized in a way such that after quantization, the least significant bit of the comparison result corresponds to, i.e. has the same significance as, a bit of the previous division result that is at a fixed distance, i.e. a fixed number of bits, away (in the less significant direction) from the most significant non-zero bit of the previous division result. For example, the comparison result before quantization may be '0000001010(base-2)', and the previous division result may be '0001101000(base-2)'. If the desired bit-depth of the comparison result after quantization is 5-bit, then the least significant bit of the comparison result after quantization may correspond to a bit of the previous division result that is 3 bits away from the most significant non-zero bit of the previous division result. In thiscase, the most significant non-zero bit of '0001101000(base-2)' is the fourth bit from the left, therefore, the least significant bit of the comparison result after quantization may correspond to the seventh bit from the left. Hence, the comparison result after quantization may become '00001(base-2)'. In this way, the least significant bit value of the comparison result after quantization may be considered approximately proportional to the previous division result.

In a further advantageous embodiment, the readout processor is configured to encode and/ or communicate the division result of the pixel and/ or the part of the comparison result that is linearly dependent on or equal to the division result in a floating-point format. The division result of the pixel may contain more significant digits, i.e. have a higher precision, than required by an application. Therefore, to achieve a desirable trade-off between range and precision, the division result and/ or the part of the comparison result that is linearly dependent on or equal to the division result may be encoded in a floating-point format, e.g. a base-2 floating-point format, where the significand contains exactly the number of significant digits, i.e. the exact precision, required by the application. For example, the division result '0110010110 0010110101 (base-2)' contains 19 significant digits, while the application may require only an 8-bit precision. In this case, the division result and/ or the corresponding part of the comparison result may be encoded as '11001011(base-2) x 2^11', i.e. '11001011(base-2) times2 to the power of 11'. This also means that the previous division result of the pixel, the previous division result of the corresponding pixel, the spatiotemporal contrast, the spatiotemporal difference, the intensity value and/ or the related part(s) of the comparison result(s) may also be encoded and/ or communicated in the floating-point format. For clarity, all numerical values listed herein shall be interpreted as in base-10, unless specified otherwise, for example, '11001011(base-2)' shall be interpreted as in base-2.

Preferably, the readout processor is configured to determine the count threshold as an exponentiation of a constant base to a variable power, such that the interval count at the end of each accumulation is always equal to the exponentiation of the constant base to the variable power. This way, the significand of the division result in the floating-point format may be based on, i.e. linearly dependent on or equal to, the accumulated pixel value, whereas the exponent of the division result may be based on, i.e. linearly dependent on or equal to, the opposite, i.e. the additive inverse, of the variable power of the interval count. Smilarly, the significand of the previous division result in the floating-point format may be based on, i.e. linearly dependent on or equal to, the previous accumulated pixel value, whereas the exponent of the previous division result may be based on, i.e. linearly dependent on or equal to, the opposite, i.e. the additive inverse, of the variable power of the previous interval count. Both the base of the division result and the base of the previous division result in the floating-point format may be based on, i.e. linearly dependent on or equal to, the constant base of the interval count or the previous interval count, i.e. the constant base of the count threshold. This also means that storing the previous accumulated pixel value and the previous interval count is effectively equivalent of storing the previous division result in the floating-point format.

Advantageously, the readout processor is configured to calculate and normalize the spatiotemporal difference in the floating-point format or the temporal difference in the floating-point format with respect to the division result of the pixel of the pixel block. In other words, the spatiotemporal difference or the temporal difference may be calculated and normalized to share the exponent of the division result of the pixel.

Furthermore, the readout processor is configured to specify the comparison result(s) related to the spatiotemporal difference in the floating-point format to be:
- zero, if the significand of the spatiotemporal difference does not exceed the difference threshold(s), in order to minimize noise in the event data;
- containing a part that is linearly dependent on or equal to the significand of the spatiotemporal difference, and a second part that reflects, i.e. encode, a scaling factor, if the significand of the spatiotemporal difference exceeds the difference threshold(s) and does not exceed a difference range/ limit, and if the scaling factor does not exceed a scaling factor range/ limit, where the scaling factor is defined based on, i.e. linearly dependent on or equal to, a difference between the exponent of the division result of the pixel and the exponent of the previous division result of the corresponding pixel, or based on, i.e. linearly dependent on or equal to, a difference between the exponent of the division result of the pixel and the exponent of the previous division result of the pixel;
- containing a part that is linearly dependent on or equal to the division result of the pixel of the pixel block, if the significand of the spatiotemporal difference exceeds the difference range/ limit, or if the scaling factor exceeds the scaling factor range/ limit.

Here, the difference range/ limit and the scaling factor range/ limit are also predetermined based on the encoding capacity of the event data, e.g. the size of data packets. Preferably, when the comparison result is not zero, the comparison result may further contain an indicator that indicates whether the comparison result contains a part that is linearly dependent on or equal to the significand of the spatiotemporal difference and a second part that reflects the scaling factor, or contains a part that is linearly dependent on or equal to the division result. As an advantageous alternative, when the comparison result is not zero, the comparison result may always contain a second part that reflects the scaling factor, where the scaling factor may also indicate whether the comparison result contains a part that is linearly dependent on or equal to the significand of the spatiotemporal difference, or contains a part that is linearly dependent on or equal to the division result.

According to a preferred embodiment, in particular of the first aspect of the invention, the readout processor is configured to generate the event of the event data if the displacement between the best matching block and the pixel block is not zero or if the comparison results associated with the best matching block are not all zero. The event of the event data may contain the following information: a pixel block address, e.g. pixel block coordinateswith reference to the pixel array, the displacement, the mode comparison result, a relative pixel address, e.g. pixel coordinates with reference to the pixel block, the outlier comparison result and/ or the comparison result.

Alternatively, according to a preferred embodiment, in particular of the second aspect of the invention, the readout processor is configured to generate the event of the event data if the comparison results of the pixel block are not all zero. The event of the event data may contain the following information: a pixel block address, e.g. pixel block coordinateswith reference to the pixel array, the mode comparison result, a relative pixel address, e.g. pixel coordinateswith reference to the pixel block, the outlier comparison result and/ or the comparison result.

Here, preferably, for both the two aspects of the invention, if a mode comparison result is found and is not zero, then the relative pixel address may be used to indicate where the outlier comparison result is in the pixel block; if the mode comparison result is not found or is found to be zero, then the relative pixel address may be used to indicate where the non-zero comparison result is in the pixel block. Furthermore, if the mode comparison result is found to be zero, then the mode comparison result may not need to be encoded and communicated as part of the event data.

According to a cumulative and advantageous embodiment, in particular of the first aspect of the invention, upon generating the event, the readout processor is configured to overwrite, for each pixel of the pixel block, the previous accumulated pixel value and the previous interval count based on the event, i.e. based on the displacement between the best matching block and the pixel block, and the comparison results associated with the best matching block, specifically:
i) regardless of whether the displacement of the pixel block is zero or not, if the comparison result associated with the pixel is not zero, then:
   - overwrite the previous accumulated pixel value of the pixel based on the previous accumulated pixel value of the corresponding pixel of the best matching block and the associated comparison result, and
   - overwrite the previous interval count of the pixel based on the previous interval count of the corresponding pixel of the best matching block and the associated comparison result;
ii) if the displacement of the pixel block is not zero, and if the comparison result associated with the pixel is zero, then:
   - overwrite the previous accumulated pixel value of the pixel with the previous accumulated pixel value of the corresponding pixel of the best matching block, and
   - overwrite the previous interval count of the pixel with the previous interval count of the corresponding pixel of the best matching block;
iii) if the displacement of the pixel block is zero, and if the comparison result associated with the pixel is also zero, then do not overwrite the previous accumulated pixel value and the previous interval count of the pixel.

Alternatively, according to a cumulative and advantageous embodiment, in particular of the second aspect of the invention, upon generating the event, the readout processor is configured to overwrite, for each pixel of the pixel block, the previous accumulated pixel value and the previous interval count based on the event, i.e. based on the comparison results of the pixel block, specifically:
i) if the comparison result associated with the pixel is not zero, then:
   - overwrite the previous accumulated pixel value of the pixel based on the previous accumulated pixel value itself and the associated comparison result, and
   - overwrite the previous interval count of the pixel based on the previous interval count itself and the associated comparison result;
ii) if the comparison result associated with the pixel is zero, then do not overwrite the previous accumulated pixel value and the previous interval count of the pixel.

As described previously, the previous accumulated pixel value and the previous interval count may together encode the previous division result in the floating-point format, and the accumulated pixel value and the interval count may together encode the division result in the floating-point format. Therefore, in the following, the previous accumulated pixel value and the previous interval count may collectively be referred to as the previous division result, while the accumulated pixel value and the interval count may collectively be referred to as the division result.

The purpose of the event is to allow a receiver to, for each pixel, based on the event, in particular based on the associated comparison result and/ or the displacement encoded and communicated by the event, given a receiver's previous division result of the pixel or of the corresponding pixel of the best matching block, derive a receiver's division result of the pixel that is as close as possible to the division result of the pixel, i.e. the readout processor's division result of the pixel. However, there is possible discrepancy between the receiver's division result and the readout processor's division result due to possible quantization noise in the comparison result. Because the receiver's division result will in turn serve as a future receiver's previous division result for deriving a future receiver's division result, it is important to prevent such possible discrepancy from accumulating in time. Therefore, upon generating the event, the readout processor updates the previous division result of the pixel by duplicating the receiver's derivation of the receiver's division result, i.e. by updating the previous division result of the pixel based on the associated comparison result and the previous division result of the pixel itself or of the corresponding pixel. The updated previous division result will in turn be used by the readout processor as basis for generating a future event. This way, the possible discrepancy introduced by each event is taken into account by the readout processor for generating a future event, thus effectively preventing such possible discrepancy from accumulating in time between the event sensor and the receiver.

According to further aspects of the invention, methods for producing a data stream of event data in reaction to light incident on a pixel array of pixels are provided. Any features and advantages described herein in connection with the event sensor may also apply analogously to the method.

Some examples of embodiments of the present invention will be explained in more detail in the following description with reference to the accompanying schematic drawings, wherein:
- Fig. 1: shows a block diagram of an event sensor architecture according to a preferred embodiment;
- Fig. 2: shows a flow chart of a method for producing a data stream of event data in reaction to light incident on a pixel array according to a preferred embodiment;
- Fig. 3: shows a search region with superimposed candidate blocks and a best matching block for illustrating the process of detecting a relative movement at the pixel block;
- Figs. 4a-d: show a pixel block and various results from the process of generating an event based on the detected relative movement;
- Fig. 5: shows examples of event data produced based on the best matching block shown in Fig. 3 and the results shown in Fig. 4;
- Fig. 6: illustrates the updating of previous division results based on the best matching block shown in Fig. 3 and the results shown in Fig. 4;
- Fig. 7: shows a search region with a superimposed candidate block and a best matching block for illustrating the process of detecting a relative movement and/ or a change in illumination at the pixel block;
- Fig. 8a-e: show a pixel block and various results from the process of generating an event based on the detected change in illumination;
- Fig. 9: shows examples of event data produced based on the results shown in Fig. 8;
- Fig. 10: illustrates the updating of previous division results based on the best matching block shown in Fig. 7 and the results shown in Fig. 8;

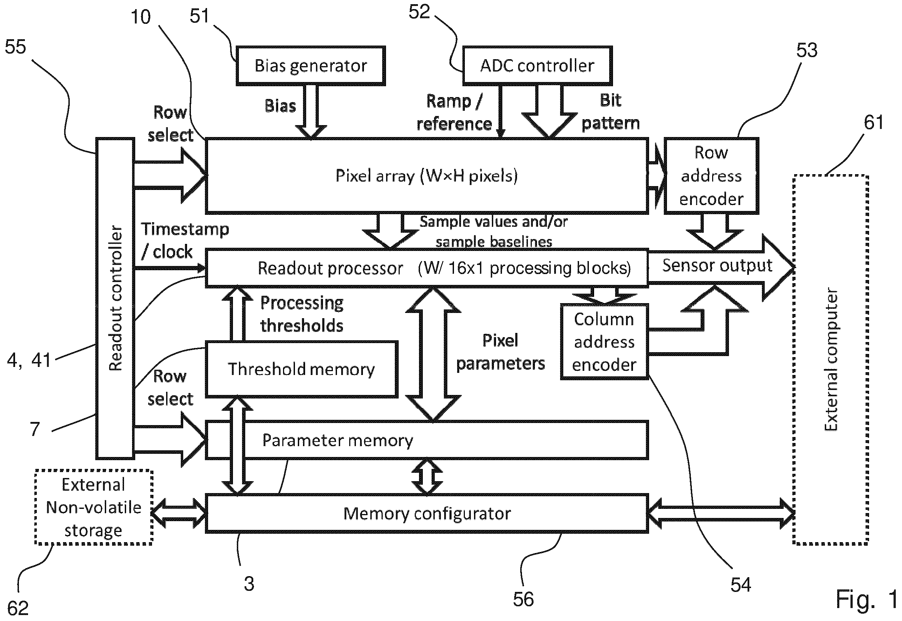

Fig. 1 shows the event sensor architecture according to one advantageous embodiment. The event sensor contains a two-dimensional pixel array 10 of W columns by H rows of the pixels. While many different configurations for implementing a pixel array are possible, in one advantageous embodiment, each pixel of the pixel array comprises exactly one photodetector, preferably a photodiode, which converts photons to electrons and one. The photodiodes of 16 pixels, i.e. 4 rows by 4 columns of the pixels, are connected to a signal converter, which comprises 16 analog converters, preferably a charge-to-voltage convert er or electron-to-voltage (e/ V) convert er, and an analog-to-digital converter (ADC). Other advantageous embodiments may foresee that the signal converter further implements a programmable gain and/ or comprises an analog amplifier.

In the event sensor shown in Fig. 1, a bias generator 51 provides bias voltages to the pixel array 10. An ADCcontroller 52 provides a ramp/ reference voltage and a bit pattern in Gray code format to the pixel array 10. A row address encoder 53 and a column address encoder 54 encode a pixel block address in the pixel array 10.

Advantageously, a readout processor 4 consists of W/ 16 (one sixteenth of W) columns by one row of processing blocks 41. Each processing block 41 is configured to process four columns of the pixel blocks in the pixel array 10, one pixel block at a time. All processing blocks 41 can process simultaneously in parallel, so the readout processor 4 can process 1/ 4 row (one quarter of a row) of the pixel blocks simultaneously in parallel at a time. The readout processor 4 reads the sample values and/ or sample baselines from the pixel array 10 and reads/ writes pixel parameters from/ to a parameter memory 3. The parameter memory 3 is advantageously SRAM-based. The read and write operations between the pixel array 10, the readout processor 4 and the parameter memory 3 are coordinated by a readout controller 55. The readout processor 4 is connected with a threshold memory 7, which stores two lookup tables, namely a first lookup table and a second lookup table. The parameter memory 3 and the threshold memory 7 can be loaded from an external non-volatile storage 62, such as a flash memory, and/ or programmed or updated by an external computer 61 via a memory configurator 56.

The parameter memory 3 stores the pixel parameters, which may include: an accumulated pixel value (in the following abbreviated to APV), a previous APV, an interval count, a previous interval count and a count threshold.

The interval count and the count threshold are per pixel-block-specific, which means that each pixel block is associated with one interval count and one count threshold, such that the pixels of the same pixel block start and end an accumulation together at the same time synchronously. The rest of the pixel parameters are pixel specific, which means that each pixel associated with one APV, one previous APV and one previous interval count. The silicon area of the entire parameter memory 3 serving a 1 Megapixel pixel array 10 is estimated to require an area of less than 8 mm² if using a state-of-the-art 28 nm SRAM technology.

The first lookup table in the threshold memory 7 may receive from the readout processor a block division result (the derivation of which is described later) as an input, and produce to the readout processor a count threshold as an output. The second lookup table in the threshold memory 7 may receive from the readout processor an APV as an input, and produce to the readout processor a difference threshold as an output. The two lookup tables guide the readout processor to dynamically determine the count threshold and the difference threshold when processing different pixel blocks and different pixels at different times. The content of the two lookup tables may be determined based on a one-time calibration procedure.

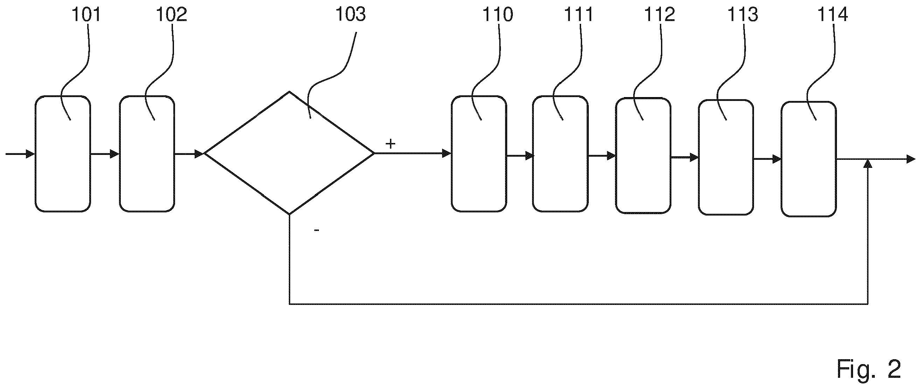

A method, according to a preferred embodiment, for producing a data stream of event data in reaction to light incident on the pixel array 10 is shown in Fig. 2 as a flow chart. In one step 101, an APV is derived for each pixel of a pixel block. The APV corresponds to an accumulation of a detector signal over the interval count of sampling intervals. The APV is pixel-specific, while the interval count may be pixel-block-specific. Then, in another step 102, a mean APV of the pixels in the pixel block is derived as an accumulated block value (in the following abbreviated to ABV) for the pixel block. Thus, each pixel block now has two pixel-block-specific parameters, namely an ABV and an interval count.

At each sampling interval during the accumulation, a comparison step 103 is performed, in which the interval count is compared to a count threshold determined during a previous processing iteration. If the comparison yields that the interval count exceeds the count threshold, then a condition is met (i.e. the condition is positively fulfilled) under which the accumulation is ended for the pixel block and one processing iteration is performed on the pixels of the pixel block. If the comparison yields that the interval count does not exceed the count threshold, then the condition is not met, therefore the accumulation continues for the pixel block and no processing iteration is performed on the pixels of the pixel block. In Fig. 2, the decision whether the condition is met or not is represented by a decision symbol "+" or "-" respectively 103.

Each processing iteration consists of five steps 110-114. In a threshold determining step 110, a count threshold for a subsequent accumulation is determined for the pixel block based on the block division result by referring to the first lookup table, wherein the block division result is calculated as a result of dividing the ABV by the interval count. Furthermore, in the first aspect of the invention, steps 111-113 for detecting a relative movement at the pixel block are performed, resulting in a possible generation of an event in a final step 114. These steps 111-114 correspond respectively to steps f1 to f4 in claim 1. In a search region definition step 111, a search region is determined, which comprises a number of candidate blocks. In other words, the candidate blocks are being defined along with the search region. In an evaluation procedure step 112, the following sub-steps are performed for each candidate block: firstly, the previous APV and the previous interval count of each pixel of the candidate block are read; secondly, for each pixel of the pixel block and a corresponding pixel of the candidate block, a difference threshold is determined based on the APV of the pixel by referring to the second lookup table; thirdly, for each pixel of the pixel block and a corresponding pixel of the candidate block, a spatiotemporal difference and a communication cost are calculated; fourthly, a cost function result for each candidate block is calculated based on the spatiotemporal difference and the communication cost associated with each pixel of the pixel block and a corresponding pixel of the candidate block. In a subsequent step 113, by comparing the cost function results of all the candidate blocks, a best matching block with the lowest cost function result is found. In the final step 114, an event of the event data is generated based on a displacement between the best matching block and the pixel block, i.e. the relative movement, and/or comparison results associated with the best matching block.

### Example 1

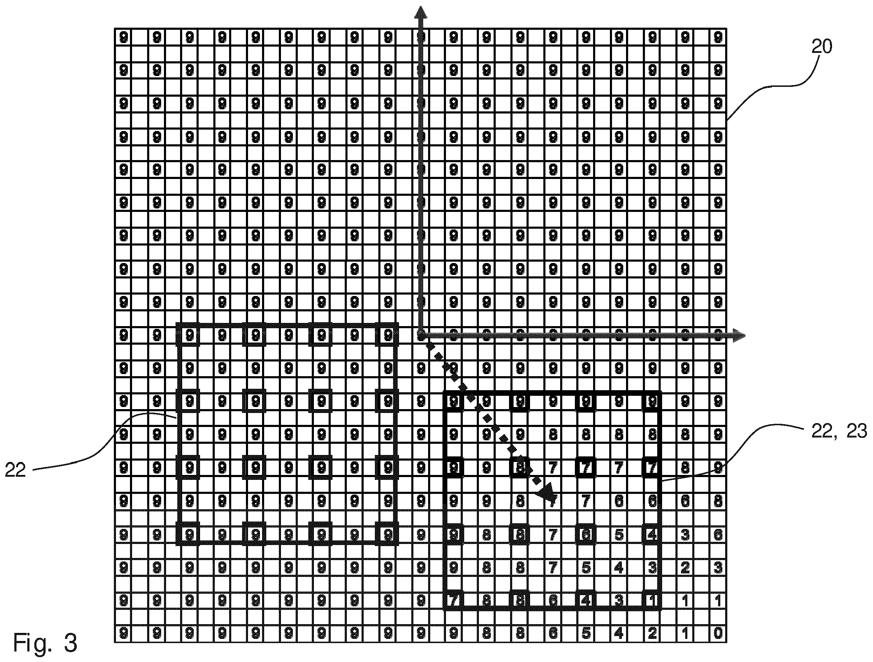

The steps 111-114 described above are demonstrated in a first example with the help of Figs. 3-6. Fig. 3 shows a search region 20, which geometrically covers or spans over a region of the pixel array. Each small square in Fig. 3 represents a pixel, such that the region of the pixel array shown measures 37x37 pixels. The search region 20 itself encompasses only the pixels that contain numbers, thus being made of 19x19 pixels. I.e., in this specific case, each two neighboring pixels of the search region are separated by one pixel of the pixel array that does not belong to the search region. Each of the numbers shown in the pixels of the search region 20 represents a previous division result of the pixel, i.e. result of dividing a previous APV by a previous interval count.

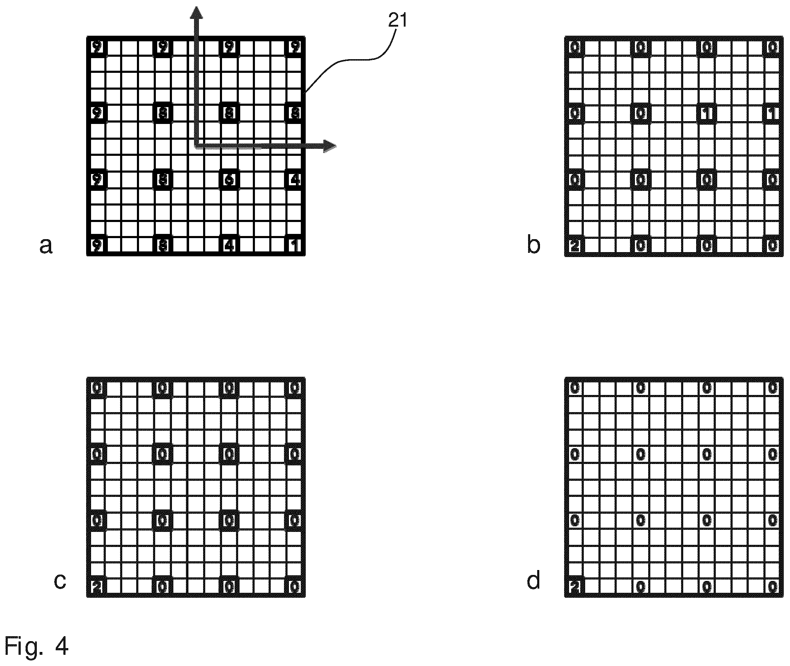

The pixel block 21 being processed is shown in Fig. 4a. Each small square in Fig. 4 represents a pixel. The search region is made of 4x4 pixels that contains numbers and geometrically covers or spans over a region of the pixel array that measures 13x13 pixels. I.e., in this specific case, each two neighboring pixels of the pixel block are separated by three pixels of the pixel array that do not belong to the pixel block. The numbers shown in the pixel block 21 each represents a division result of dividing an APV by an interval count. The arrowed axes shown in Fig. 3 and Fig. 4a establish a reference frame with its origin (0, 0) at the center of the pixel block 21.

The search region 20 shown in Fig. 3 contains 13x13 candidate blocks. The center of the search region is at the origin of the pixel block reference frame. Two different candidate blocks 22 are outlined by thick lines in Fig. 3, one with the origin (as indicated by the dashed arrow) at (4, -5) and one with the origin at (-4, -3) in the pixel block reference frame. For each candidate block 22 in the search region 20, a spatiotemporal difference between each pixel of the pixel block 21 and a corresponding pixel of the candidate block 22 is calculated. Fig. 4b shows the results of this calculation for the candidate block at position (4, -5), which will later be determined as a best matching block 23. The results in Fig. 4b are all zero except of two '1' values and one '2' value. In a further step, for each candidate block, comparison results of comparing the associated spatiotemporal differences against a difference threshold, e.g. '1', are derived, such that each spatiotemporal difference corresponds to a comparison result. The comparison results for the best matching block are shown in Fig. 4c, which now shows only one value above zero, namely the '2' value, which exceeds the difference threshold.

The best matching block 23 is found out of the candidate blocks 22 based on a cost function calculating a weighted sum of absolute values of the spatiotemporal differences associated with the candidate block 22, where each absolute value of the spatiotemporal difference is weighted by a communication cost to communicate the corresponding comparison result. In this case, the center of the best matching block 23 is located at (4, -5) in the pixel block reference frame. Therefore, a displacement between the pixel block and the best matching block is detected to be (4, -5) and is encoded as part of the event data, indicating a detected relative movement. Furthermore, non-zero comparison result(s) associated with the best matching block 23 is/ are also encoded as part of the event data. In this specific case, the non-zero comparison result is only the '2' value associated with the bottom left pixel the pixel block 21 as outlined by thick lines in Fig. 4d.

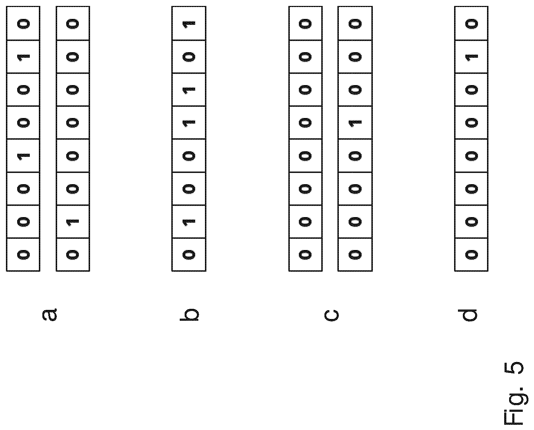

The event data corresponding to the pixel block 21 is a stream of 8-bit data packets comprising parts a-d shown in Fig. 5a-d. Part a comprises one or more data packet(s) encoding a pixel block address (here the two data packets shown in Fig. 5a). Part b comprises a data packet encoding the displacement between the pixel block 21 and the best matching block 23 (here the data packet in Fig. 5b encoding the vector (4, -5)). Part c comprises two data packets encoding (a) relative pixel address(es) of the non-zero comparison result(s) associated with the best matching block 23 (here the two data packets shown in Fig. 5c). Part d comprises data packet(s) encoding the signed magnitude(s) of the non-zero comparison result(s) (here the data packet shown in Fig. 5d). In the data packets of part c shown in Fig. 5c, each bit represents one pixel of the pixel block 21, "1" meaning there is a non-zero comparison result associated with the pixel, and "0" meaning there is no non-zero comparison result associated with the pixel. The first, i.e. left-most, bit in the first data packet of part c represents the top left pixel in the pixel block 21, while the last, i.e. right-most, bit in the second data packet of part c represents the bottom right pixel in the pixel block 21. And the data packet of part d shown in Fig. 5d encodes the non-zero comparison result '2' associated with the bottom left pixel in the pixel block 21 as outlined by thick lines in Fig. 4d.

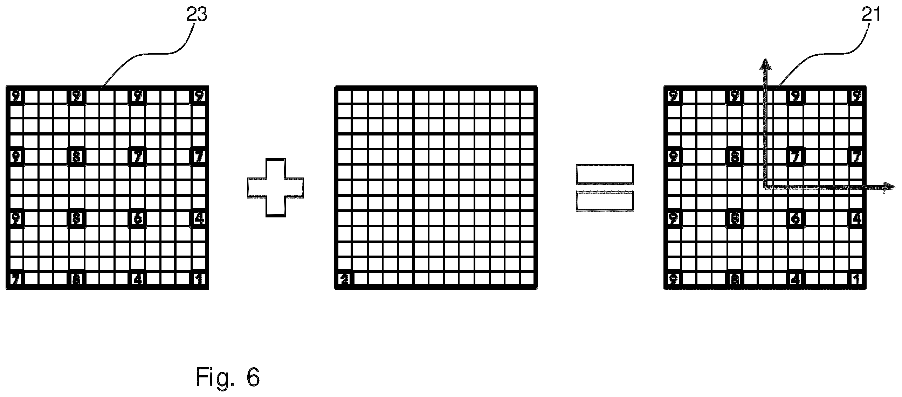

Upon the event data corresponding to the pixel block 21 being produced, the previous division results of the pixel block 21 are updated based on the event data, as visualized in Fig. 6. The bottom left pixel in the pixel block is associated with the non-zero comparison result '2', so the previous division result of the bottom left pixel in the pixel block is overwritten by the sum of the previous division result of the corresponding bottom left pixel in the best matching block and the associated non-zero comparison result '2'. The rest of the pixels in the pixel block are not associated with non-zero comparison results, but the displacement (4, -5) is detected between the pixel block and the best matching block, therefore the previous division results of the rest of the pixels in the pixel block are overwritten by the previous division results of the corresponding pixels in the best matching block respectively. In other words, the updated previous division results of the pixel block 21 are obtained by adding together pixel-by-pixel correspondingly the previous division results of the best matching block 23 and the non-zero comparison result(s) associated with the best matching block.

### Example 2

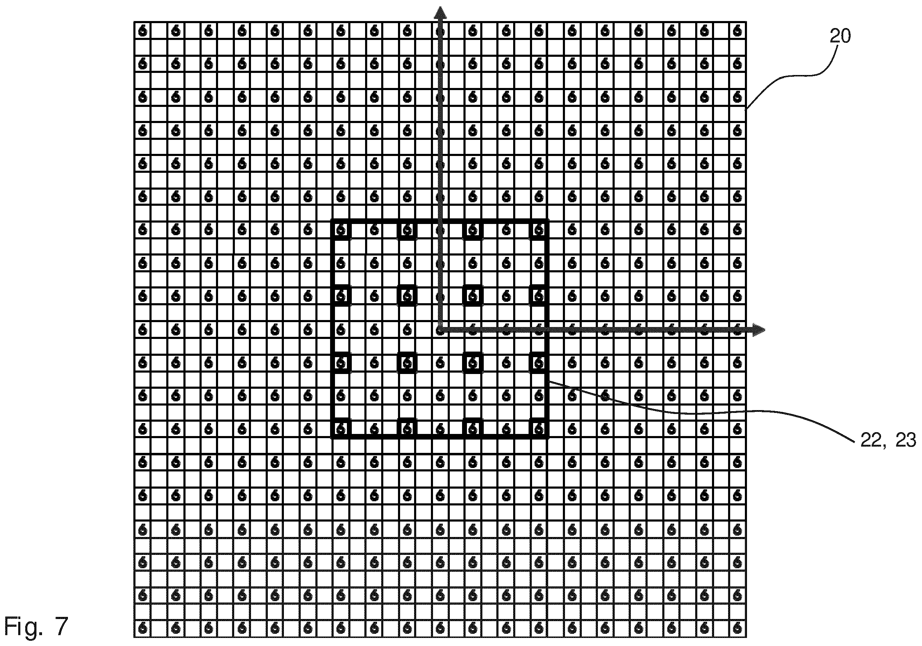

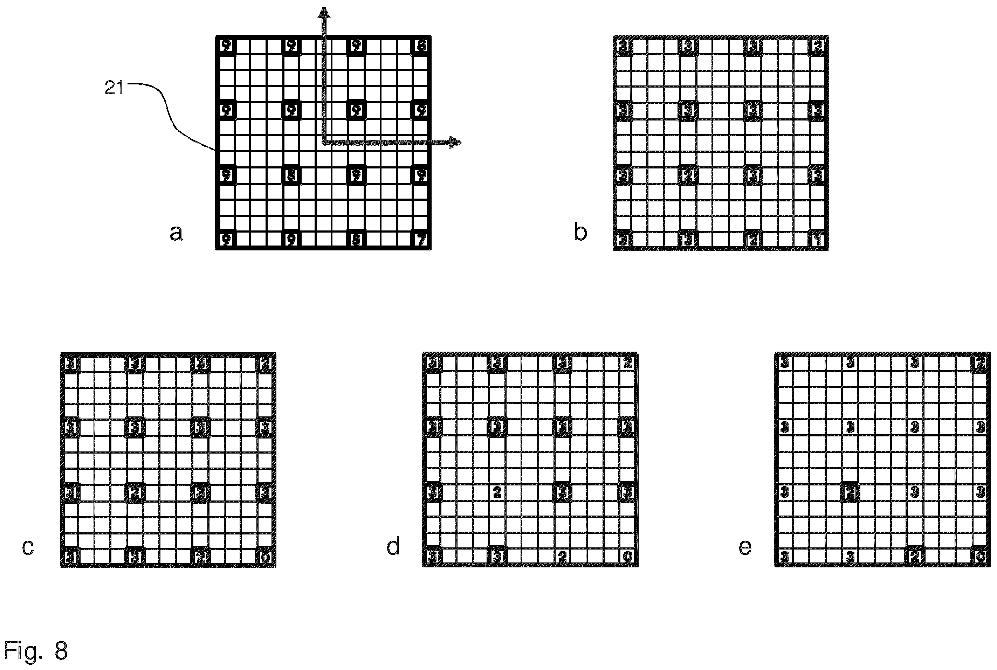

Fig. 7-10 illustrate a different example where upon the search for a best matching block, no relative movement, but a relatively uniform change in illumination has been detected to have taken place at the pixel block. Fig. 7-10 shall be interpreted the same way Fig 3-6 are interpreted respectively as explained in example 1. Fig. 7 showsthat a search region is defined. Fig. 8a shows the pixel block 21 being processed. The arrowed axes shown in Fig. 7 and Fig. 8a establish a reference frame with its origin (0, 0) at the center of the pixel block 21. The numbers shown in the pixel block 21 each represent a division result. The numbers shown in the search region 20 each represents a previous division result.

The candidate block 22 outlined by thick lines in Fig. 7 has its origin at (0, 0) in the pixel block reference frame. For each candidate block 22 in the search region 20, a spatiotemporal difference between each pixel of the pixel block 21 and a corresponding pixel of the candidate block 22 is calculated. Fig. 8b shows the results of this calculation for the candidate block at position (0, 0) in Fig. 7, which will later be determined as a best matching block 23. In a further step, for each candidate block, comparison results of comparing the associated spatiotemporal differences against a difference threshold, e.g. '1', are derived, such that each spatiotemporal difference corresponds to a comparison result. The comparison results for the best matching block are shown in Fig. 8c. The best matching block 23 is found based on a cost function calculating a weighted sum of absolute values of the spatiotemporal differences associated with the candidate block 22, where each absolute value of the spatiotemporal difference is weighted by a communication cost to encode and communicate the corresponding comparison result. In this case, the center of the best matching block 23 is located at (0, 0) in the pixel block reference frame. Therefore, a displacement between the pixel block 21 and the best matching block 23 is found to be zero, i.e. no relative movement is detected.

As shown in Fig. 8d, a mode comparison result is found to be '3' among all comparison results associated with the best matching block 23. The pixels associated with the mode comparison result are outlined by thick lines in Fig. 8d. The mode comparison result is encoded as part of the event data. In a further step, outlier comparison results are found among all comparison results associated with the best matching block 23. The pixels associated with the outlier comparison results are outlined by thick lines in Fig. 8e. The outlier comparison results are also encoded as part of the event data.

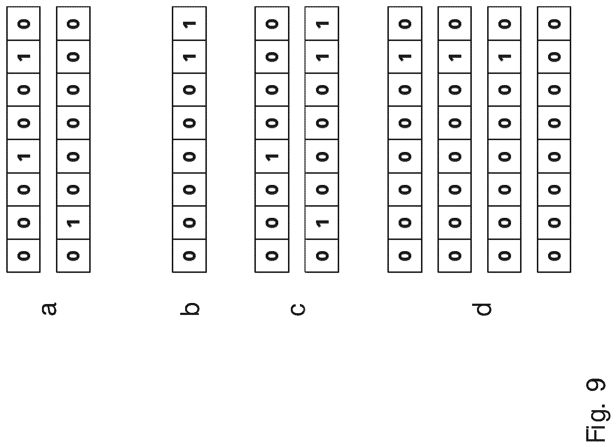

The event data corresponding to the pixel block 21 is a stream of 8-bit data packets comprising parts a-d shown in Fig. 9a-d. Part a comprises one or more data packet(s) encoding a pixel block address (here the two data packets shown in Fig. 9a). As the displacement is zero in this case, no data packet encoding the displacement is needed, unlike the data packet shown in Fig. 5b. Part b instead comprises a data packet encoding the signed magnitude of the mode comparison result associated with the best matching block (here the data packet in Fig. 9b, encoding the value '3'). Furthermore, part c comprises two data packets encoding (a) relative pixel address(es) of the outlier comparison result(s) associated with the best matching block (here the two data packets shown in Fig. 9c). And part d comprises data packet(s) encoding the signed magnitude(s) of the outlier comparison result(s) (here the four data packets shown in Fig. 9d, encoding the values '2', '2', '2', and '0').

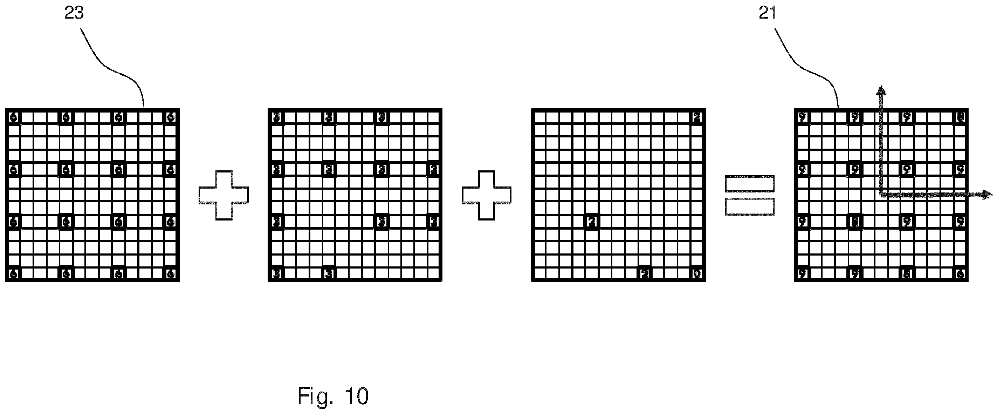

Upon the event data corresponding to the pixel block 21 being produced, the previous division results of the pixel block 21 are updated based on the event data, as visualized in Fig. 10. All the pixels except for the bottom right pixel in the pixel block are associated with non-zero comparison results as shown in Fig. 8c, so their previous division results are overwritten by the sum of the previous division results of the corresponding pixels in the best matching block and the corresponding comparison results respectively. More specifically, for the pixels that are associated with the mode comparison result, their previous division results are overwritten by the sum of the mode comparison result and the previous division results of the corresponding pixels in the best matching block respectively; whereas for the pixels that are associated with the outlier comparison results, their corresponding previous division results are overwritten by the sum of the corresponding outlier comparison results and the previous division results of the corresponding pixels in the best matching block respectively. The bottom right pixel in the pixel block is associated with a comparison result '0', and the displacement between the pixel block and the best matching block is also zero, so the previous division result of the bottom right pixel in the pixel block is not updated. In other words, the updated previous division resultsof the pixel block 21 are obtained by adding together pixel-by-pixel correspondingly the previous division results of the best matching block 23 and the non-zero comparison result(s) associated with the best matching block. And in this case when the mode comparison result and the outlier comparison results are encoded in the event data, the updated previous division resultsof the pixel block 21 are obtained by adding together pixel-by-pixel correspondingly the previous division results of the best matching block 23, the mode comparison result associated with the best matching block shown in Fig. 8d and the outlier comparison results associated with the best matching block shown in Fig. 8e.

### Example 3

In the following, an advantageousway of deriving and encoding the comparison result is described.

To start with, the division result is encoded in a floating-point format, where the significand is based on the APV, while the base and the exponent are based on the interval count. In particular, by always determining the count threshold to be an exponentiation of a constant base, e.g. '2', to a variable power, the interval count at the end of each accumulation is always equal to such exponentiation of the constant base to the variable power. For clarity, all numerical values listed herein shall be interpreted as in base-10, unless specified otherwise, for example, '0001110010(base-2)' shall be interpreted as in base-2.

As an example, an APV may be '114' and an interval count may be '2^12', so a division result of dividing the APV by the interval count may be encoded as '114 x 2^-12' (i.e. '114 times 2 to the power of -12'), where the significand, '114' or '0001110010(base-2)', takes its value directly from the APV, while the exponent '-12' is derived as the opposite of the variable power '12' of the interval count. The base of the division result adopts the constant base '2'. Furthermore, the exponent of the division result may be encoded by an exponent code as '0011(base-2)'.

Smilarly, a corresponding previous APV may be '208' and a corresponding previous interval count may be '2^13', so a corresponding previous division result may be encoded as '208 x 2^-13', where the significand, '208' or '0011010000(based-2)', takes its value directly from the previous APV, while the exponent '-13' is derived as the opposite of the variable power '13' of the previous interval count. The base of the previous division result also adopts the constant base '2'. Furthermore, the exponent of the previous division result may also be encoded by the exponent code as '0010(base-2)'.

The exponent may be derived based on the interval count or the previous interval count and encoded by the exponent code according to the following table:

| Exponent code (base-2) | Exponent | Interval count/ previous interval count |
|---|---|---|
| 0000 | -15 | 2^15 |
| 0001 | -14 | 2^14 |
| 0010 | -13 | 2^13 |
| 0011 | -12 | 2^12 |
| 0100 | -11 | 2^11 |
| 0101 | -10 | 2^10 |
| 0110 | -9 | 2^9 |
| 0111 | -8 | 2^8 |
| 1000 | -7 | 2^7 |
| 1001 | -6 | 2^6 |
| 1010 | -5 | 2^5 |
| 1011 | -4 | 2^4 |
| 1100 | -3 | 2^3 |
| 1101 | -2 | 2^2 |
| 1110 | -1 | 2^1 |
| 1111 | 0 | 2^0 |

In a first step, the previous division result is normalized with respect to the exponent of the division result, to obtain a normalized previous division result, such that the significand of the normalized previous division result, which is '0001101000(base-2)' or '104', and the exponent of the division result, which is '-12', together still encode the previous division result, i.e. ' 104 x 2^-12' is equivalent of '208 x 2^-13'.

In a second step, a spatiotemporal difference between the division result and the normalized previous division result is calculated, where the exponent of the spatiotemporal difference simply adopts the exponent of the division result, while the significand of the spatiotemporal difference is calculated as a difference between the significand of the division result and the significand of the normalized previous division result. Therefore, the significand of the spatiotemporal difference is calculated to be '0000001010(base-2)', or ' 10' .

In a third step, the significand of the spatiotemporal difference is compared against a difference threshold, e.g. '6'. Finally, because the significand of the spatiotemporal difference exceeds the difference threshold in this particular case, the comparison result encodes an 8-bit quantized difference, which consists of a 1-bit sign, a 5-bit magnitude and a 2-bit scaling factor. The sign of the quantized difference is simply the sign of the spatiotemporal difference. The magnitude of the quantized difference is based on the most significant non-zero bit of the significand of the normalized previous division result, '0001101000(base-2)'. In thisexample, the most significant non-zero bit of '0001101000(base-2)' is the fourth bit from the left, and the magnitude of the quantized difference keeps 5-bit of information out of the significand of the spatiotemporal difference, '0000001010(base-2)', from one bit to the left of the fourth bit, i.e. the third bit from the left, to the seventh bit from the left. Hence, the magnitude of the quantized difference becomes ' 00001(base-2)'. The scaling factor of the quantized difference encodes the ratio between the interval count and the previous interval count according to the following table:

| Scaling factor (base-2) | Meaning |
|---|---|
| 00 | The interval count = the previous interval count |
| 01 | The interval count = the previous interval count / 2 |
| 10 | The interval count = the previous interval count * 2 |
| 11 | Out-of-range |

Hence, the scaling factor in this example is determined to be '01(base-2)'.

### Example 4

In the following, an alternative way of deriving and encoding the comparison result is described.

Starting with a similar approach as shown in Example 3, the division result is still encoded in a floating-point format, where the significand is based on the APV, while the base and the exponent are based on the interval count. The count threshold is still determined to be an exponentiation of a constant base, e.g. '2', to a variable power, so the interval count at the end of each accumulation is always equal to such exponentiation of the constant base to the variable power. For clarity, all numerical values listed herein shall be interpreted as in base-10, unless specified otherwise.

The tables for the exponent code and the exponent in dependence of the interval count, and for the scaling factor from Example 3 may still be utilized.

Thistime, an APV may be '114' and an interval count may be '2^8', so a division result of dividing the APV by the interval count may be encoded as '114 x 2^-8' , where the significand based on the APV is '114' or '0001110010(base-2)', and the exponent based on the interval count is '-8', which is further encoded by the exponent code as '0111(base-2)'. The base of the division result adopts the constant base '2'.

Smilarly, a corresponding previous APV may be '518' and a corresponding previous interval count may be '2^11', so a corresponding previous division result may be encoded as '518 x 2^-11', where the significand based on the previous APV is '518' or '1000000110(base-2)', and the exponent based on the previous interval count is '-11', which is further encoded by the exponent code as'0100(base-2)'. The base of the previous division result also adopts the constant base '2' .

In this case, because the interval count is less than half of the previous interval count, which is out-of-range for the scaling factor, the comparison result no longer encodes a quantized difference like in Example3.

Instead, the comparison result encodes directly a 16-bit intensity value, which consists of the 14-bit division result and the 2-bit scaling factor. The 14-bit division result further consists of the 10-bit significand based on the APV, which is '0001110010(base-2)', and the 4-bit exponent code based on the interval count, which is '0111(base-2)'. The 2-bit scaling factor is determined to be '11(base-2)', which also indicatesthat the comparison result encodes the intensity value instead of the quantized difference.

It should be noted that the numerical values shown in Figs. 3 to 10 and described in Examples 1 and 2 above are simplified examples without dealing with the floating-point format. When the division result, the previous division result and the comparison result are in the floating-point format, they can be processed via the steps described in Examples 1 and 2 in connection with the steps described in Examples 3 and 4.

### Reference Numerals:

- 10: pixel array

- 3: parameter memory, with
- 4: readout processor, with
- 41: processing blocks

- 51: bias generator
- 52: ADC controller
- 53: row address encoder
- 54: column address encoder
- 55: readout controller
- 56: memory configurator

- 61: external computer
- 62: external non-volatile storage

- 7: threshold memory

- 20: search region
- 21: pixel block
- 22: candidate block
- 23: best matching block

## Claims

1. Event sensor comprising a pixel array (10) of pixels and configured to produce a data stream of event data in reaction to light incident on said pixel array (10), wherein the pixels of the pixel array (10) are divided into pixel blocks, each comprising two or more pixels of the pixel array (10), the event sensor comprising:
- for each pixel of said pixel array (10) at least one photodetector (1) configured to produce a detector signal in reaction to light incident on said pixel;
- for each pixel or a group of said pixels a signal converter (2) connected to said photodetector (1) and configured to repeatedly produce and store sample values dependent on said detector signal sampled at sampling intervals;
- a readout processor (4) connected to said signal converter (2) and configured to perform the following steps on every pixel block:
a) derive, for each pixel of the pixel block, an accumulated pixel value based on one or multiple of said sample values, wherein said accumulated pixel value corresponds to an accumulation of said detector signal over an interval count of said sampling intervals;
b) derive an accumulated block value based on the accumulated pixel values of the pixels in the pixel block;
c) perform the following steps d), f1), f2), f3), and f4) on the condition that said accumulated block value exceeds an accumulated block value threshold and/ or said interval count exceeds a count threshold:
d) determine an accumulated block value threshold and/ or a count threshold for a subsequent accumulation;
f1) define a search region comprising a number of pixels equal to or larger than the number of pixels in the pixel block and comprising the pixel block, such that the search region contains one or more candidate block(s), wherein each candidate block is geometrically identical to the pixel block such that the candidate block can coincide geometrically with the pixel block via translation only, the pixel block itself also being a candidate block;
f2) for each candidate block, with respect to the pixel block, perform an evaluation procedure having the following steps:
i) for each pixel of the candidate block, read a previous accumulated pixel value and a previous interval count;
ii) for each pixel of the pixel block and a corresponding pixel of the candidate block, determine at least one contrast threshold and/ or at least one difference threshold based on the accumulated pixel value of the pixel, the previous accumulated pixel value of the corresponding pixel, the interval count of the pixel, and/ or the previous interval count of the corresponding pixel;
iii) for each pixel of the pixel block and a corresponding pixel of the candidate block, calculate one, two or three of the following three values: a spatiotemporal contrast, a spatiotemporal difference, and a communication cost, where said communication cost is calculated based on an amount of data required to encode a comparison result of comparing said spatiotemporal contrast against said contrast threshold(s) and/ or comparing said spatiotemporal difference against said difference threshold(s); and
iv) calculate a cost function result for the candidate block based on said spatiotemporal contrasts, said spatiotemporal differences, said communication costs and/ or a displacement between the pixel block and the candidate block;
f3) find a best matching block among the candidate block(s) based on the cost function result, such that the best matching block is the candidate block associated with the lowest cost function result; and
f4) generate an event of said event data based on the displacement between the best matching block and the pixel block and/ or the comparison results associated with the best matching block.

2. Event sensor according to claim 1, wherein the readout processor is configured to calculate said cost function result based on:
- a sum/ mean of absolute/ squared value of the spatiotemporal contrast/ difference between each pixel of the pixel block and a corresponding pixel of the candidate block;
- a sum/ mean of the communication cost associated with each pixel of the pixel block and a corresponding pixel of the candidate block;
- a weighted sum/ mean of absolute/ squared value of the spatiotemporal contrast/ difference between each pixel of the pixel block and a corresponding pixel of the candidate block, where the absolute/ squared value of the spatiotemporal contrast/ difference is weighted based on the corresponding communication cost associated with the pixel and the corresponding pixel; and/ or
- whether the displacement between the pixel block and the candidate block is zero or not.

3. Event sensor according to claim 1 or 2, wherein said readout processor (4) is configured to terminate the evaluation procedure early when a perfect matching block is found, wherein a cost function result associated with the perfect matching block is lower than a pre-determined threshold.

4. Event sensor according to one of the previous claims, wherein the readout processor (4) is configured to generate said event of said event data if the displacement between the best matching block and the pixel block is not zero or the comparison results associated with the best matching block are not all zero.

5. Event sensor according to one of the previous claims, wherein said readout processor is configured to overwrite said previous accumulated pixel value and said previous interval count based on said event, specifically, for each pixel of the pixel block:
i) regardless of whether the displacement of the pixel block is zero or not, if the comparison result associated with the pixel is not zero, then:
- overwrite the previous accumulated pixel value of the pixel based on the previous accumulated pixel value of the corresponding pixel of the best matching block and the associated comparison result, and
- overwrite the previous interval count of the pixel based on the previous interval count of the corresponding pixel of the best matching block and the associated comparison result;
ii) if the displacement of the pixel block is not zero, and if the comparison result associated with the pixel is zero, then:
- overwrite the previous accumulated pixel value of the pixel with the previous accumulated pixel value of the corresponding pixel of the best matching block, and
- overwrite the previous interval count of the pixel with the previous interval count of the corresponding pixel of the best matching block;
iii) if the displacement of the pixel block is zero, and if the comparison result associated with the pixel is zero, then do not overwrite the previous accumulated pixel value and the previous interval count of the pixel.

6. Event sensor comprising a pixel array (10) of pixels and configured to produce a data stream of event data in reaction to light incident on said pixel array (10), wherein the pixels of the pixel array (10) are divided into pixel blocks, each comprising two or more pixels of the pixel array (10), the event sensor comprising:
- for each pixel of said pixel array (10) at least one photodetector (1) configured to produce a detector signal in reaction to light incident on said pixel;
- for each pixel or a group of said pixels a signal converter (2) connected to said photodetector (1) and configured to repeatedly produce and store sample values dependent on said detector signal sampled at sampling intervals; and
- a readout processor (4) connected to said signal converter (2) and configured to perform the following steps on every pixel block:
a) derive, for each pixel of the pixel block, an accumulated pixel value based on one or multiple of said sample values, wherein said accumulated pixel value corresponds to an accumulation of said detector signal over an interval count of said sampling intervals;
b) derive an accumulated block value based on the accumulated pixel values of the pixels in the pixel block;
c) perform the following steps d), g1), g2), g3), and g4) on the condition that said accumulated block value exceeds an accumulated block value threshold and/ or said interval count exceeds a count threshold:
d) determine an accumulated block value threshold and/ or a count threshold for a subsequent accumulation;
g1) for each pixel of the pixel block, read a previous accumulated pixel value and a previous interval count;
g2) for each pixel of the pixel block, determine at least one contrast threshold, at least one difference threshold and/ or at least one intensity value threshold based on the accumulated pixel value, the previous accumulated pixel value, the interval count, and/ or the previous interval count of the pixel;
g3) calculate a spatiotemporal contrast, a spatiotemporal difference, an intensity value, and/ or a communication cost for each pixel of the pixel block; and
g4) generate an event of said event data based on comparison results of comparing said spatiotemporal contrast of each pixel of the pixel block against said contrast threshold(s), comparing said spatiotemporal difference of each pixel of the pixel block against said difference threshold(s) and/ or comparing said intensity value of each pixel of the pixel block against said intensity value threshold(s).

7. Event sensor according to claim 6, wherein the readout processor is configured to generate the event of the event data if the comparison results of the pixel block are not all zero.

8. Event sensor according to claim 6 or 7, wherein the readout processor is configured to overwrite, upon generating the event, for each pixel of the pixel block, the previous accumulated pixel value and the previous interval count based on the event, i.e. based on the comparison results of the pixel block, specifically:
i) if the comparison result associated with the pixel is not zero, then:
- overwrite the previous accumulated pixel value of the pixel based on the previous accumulated pixel value itself and the associated comparison result, and
- overwrite the previous interval count of the pixel based on the previous interval count itself and the associated comparison result;
ii) if the comparison result associated with the pixel is zero, then do not overwrite the previous accumulated pixel value and the previous interval count of the pixel.

9. Event sensor according to one of the previous claims, wherein the readout processor (4) is configured to:
- for each pixel block find a mode comparison result among the comparison results of the pixels in the pixel block;
- for each pixel block find outlier comparison result(s) that differ(s) from the mode comparison result; and
- generate said event of said event data based on the mode comparison result and/ or the outlier comparison result(s).

10. Event sensor according to claim 9, wherein the readout processor (4) is configured to find said mode comparison result based on:
- a frequency of occurrence of the comparison result(s) that share(s) a common value; and/ or
- a weighted frequency of occurrence of the comparison result(s) that share(s) a common value, where the weighted frequency of occurrence is weighted based on the corresponding communication cost required to encode the comparison result with said common value.

11. Event sensor according to one of the previous claims, wherein the readout processor (4) is configured to specify the comparison result associated with said spatiotemporal contrast/ difference to be:
- zero, if said spatiotemporal contrast does not exceed said contrast threshold(s) and/ or said spatiotemporal difference does not exceed said difference threshold(s);
- containing a part that is linearly dependent on or equal to said spatiotemporal contrast and/ or said spatiotemporal difference, if said spatiotemporal contrast exceeds said contrast threshold(s) and/ or said spatiotemporal difference exceeds said difference threshold(s), and if said spatiotemporal contrast is within a contrast range/ limit and/ or said spatiotemporal difference is within a difference range/ limit;
- containing a part that is linearly dependent on or equal to the division result of the pixel (of the pixel block), if said spatiotemporal contrast exceeds the contrast range/ limit and/ or said spatiotemporal difference exceeds the difference range/ limit.

12. Event sensor according to one of the previous claims, wherein the readout processor (4) is configured to quantize the part of the comparison result that is linearly dependent on or equal to said spatiotemporal contrast and/ or said spatiotemporal difference and encode said part with a smaller number of bits or a smaller number of data packets than the part of the comparison result that is linearly dependent on or equal to the division result of the pixel.

13. Event sensor according to one of the previous claims, wherein the readout processor (4) is configured to, when the comparison result contains the part that is linearly dependent on or equal to said spatiotemporal difference, quantize said part of the comparison result with a step size approximately proportional to the previous division result of the pixel or the previous division result of the corresponding pixel of the best matching block.

14. Event sensor according to one of the previous claims, wherein the readout processor (4) is configured to, when the comparison result contains the part that is linearly dependent on or equal to the division result of the pixel, encode the division result and/ or said part of the comparison result in a floating-point format.

15. Event sensor according to one of the previous claims, wherein the readout processor (4) is configured to determine said count threshold as an exponentiation of a constant base to a variable power, such that the significand of the division result in the floating-point format is based on the accumulated pixel value, whereas the exponent of the division result is based on the opposite of said variable power.

16. Method for producing a data stream of event data in reaction to light incident on a pixel array (10) of pixels, wherein the pixels of the pixel array (10) are divided into pixel blocks, each comprising two or more pixels of the pixel array (10), the method comprising the following steps performed for each pixel or a group of said pixels:
- produce a detector signal in reaction to light incident on said pixel;
- repeatedly produce and store sample values dependent on said detector signal sampled at sampling intervals;
a) derive, for each pixel of the pixel block, an accumulated pixel value based on one or multiple of said sample values, wherein said accumulated pixel value corresponds to an accumulation of said detector signal over an interval count of said sampling intervals;
b) derive an accumulated block value based on the accumulated pixel values of the pixels in the pixel block;
c) perform the following steps d), f1), f2), f3), and f4) on the condition that said accumulated block value exceeds an accumulated block value threshold and/ or said interval count exceeds a count threshold:
d) determine an accumulated block value threshold and/ or a count threshold for a subsequent accumulation;
f1) define a search region comprising a number of pixels equal to or larger than the number of pixels in the pixel block and comprising the pixel block, such that the search region contains one or more candidate block(s), wherein each candidate block is geometrically identical to the pixel block such that the candidate block can coincide geometrically with the pixel block via translation only, the pixel block itself also being a candidate block;
f2) for each candidate block, with respect to the pixel block, perform an evaluation procedure having the following steps:
i) for each pixel of the candidate block, read a previous accumulated pixel value and a previous interval count ;
ii) for each pixel of the pixel block and a corresponding pixel of the candidate block, determine at least one contrast threshold and/ or at least one difference threshold based on the accumulated pixel value of the pixel, the previous accumulated pixel value of the corresponding pixel, the interval count of the pixel, and/ or the previous interval count of the corresponding pixel;
iii) for each pixel of the pixel block and a corresponding pixel of the candidate block, calculate one, two or three of the following three values: a spatiotemporal contrast, a spatiotemporal difference, and a communication cost, where said communication cost is calculated based on an amount of data required to encode a comparison result of comparing said spatiotemporal contrast against said contrast threshold(s) and/ or comparing said spatiotemporal difference against said difference threshold(s); and
iv) calculate a cost function result for the candidate block based on said spatiotemporal contrasts, said spatiotemporal differences, said communication costs and/ or a displacement between the pixel block and the candidate block;
f3) find a best matching block among the candidate block(s) based on the cost function result, such that the best matching block is the candidate block associated with the lowest cost function result; and
f4) generate an event of said event data based on the displacement between the best matching block and the pixel block and/ or the comparison results associated with the best matching block.

17. Method for producing a data stream of event data in reaction to light incident on a pixel array (10) of pixels, wherein the pixels of the pixel array (10) are divided into pixel blocks, each comprising two or more pixels of the pixel array (10), the method comprising the following steps performed for each pixel or a group of said pixels:
- produce a detector signal in reaction to light incident on said pixel;
- repeatedly produce and store sample values dependent on said detector signal sampled at sampling intervals;
a) derive, for each pixel of the pixel block, an accumulated pixel value based on one or multiple of said sample values, wherein said accumulated pixel value corresponds to an accumulation of said detector signal over an interval count of said sampling intervals;
b) derive an accumulated block value based on the accumulated pixel values of the pixels in the pixel block;
c) perform the following steps d), g1), g2), g3), and g4) on the condition that said accumulated block value exceeds an accumulated block value threshold and/ or said interval count exceeds a count threshold:
d) determine an accumulated block value threshold and/ or a count threshold for a subsequent accumulation;
g1) for each pixel of the pixel block, read a previous accumulated pixel value and a previous interval count;
g2) for each pixel of the pixel block, determine at least one contrast threshold, at least one difference threshold and/ or at least one intensity value threshold based on the accumulated pixel value, the previous accumulated pixel value, the interval count, and/ or the previous interval count of the pixel;
g3) calculate a spatiotemporal contrast, a spatiotemporal difference, an intensity value, and/ or a communication cost for each pixel of the pixel block; and
g4) generate an event of said event data based on comparison results of comparing said spatiotemporal contrast of each pixel of the pixel block against said contrast threshold(s), comparing said spatiotemporal difference of each pixel of the pixel block against said difference threshold(s) and/ or comparing said intensity value of each pixel of the pixel block against said intensity value threshold(s).

## Patentansprüche

1. Ereignissensor, enthaltend ein Pixelarray (10) von Pixeln und konfiguriert zum Produzieren eines Datenstroms von Ereignisdaten als Reaktion auf Lichteinfall auf das Pixelarray (10), wobei die Pixel des Pixelarrays (10) in Pixelblöcke unterteilt sind, die jeweils zwei oder mehr Pixel des Pixelarrays (10) enthalten, wobei der Ereignissensor enthält:
- für jedes Pixel des Pixelarrays (10) mindestens einen Photodetektor (1), der konfiguriert ist, ein Detektorsignal als Reaktion auf auf das Pixel einfallendes Licht zu produzieren;
- für jedes Pixel oder eine Gruppe der Pixel einen Signalwandler (2), der mit dem Photodetektor (1) verbunden und konfiguriert ist, wiederholt Abtastwerte in Abhängigkeit von dem Detektorsignal zu produzieren und zu speichern, das in Abtastintervallen abgetastet wird;
- einen Ausleseprozessor (4), der mit dem Signalwandler (2) verbunden und konfiguriert ist, die folgenden Schritte auf jedem Pixelblock auszuführen:
a) Ableiten, für jedes Pixel des Pixelblocks, eines kumulierten Pixelwerts basierend auf einem oder mehreren der Abtastwerte, wobei der kumulierte Pixelwert einer Kumulation des Detektorsignals über eine Intervallzahl der Abtastintervalle entspricht;
b) Ableiten eines kumulierten Blockwerts basierend auf den kumulierten Pixelwerten der Pixel im Pixelblock;
c) Ausführen der folgenden Schritte d), f1), f2), f3) und f4) unter der Bedingung, dass der kumulierte Blockwert einen kumulierten Blockwert-Schwellenwert überschreitet und/oder die Intervallzahl einen Zahl-Schwellenwert überschreitet:
d) Bestimmen eines kumulierten Blockwert-Schwellenwerts und/oder eines Zahl-Schwellenwerts für eine nachfolgende Kumulation;
f1) Definieren eines Suchbereichs, der eine Anzahl von Pixeln enthält, die gleich oder größer als die Anzahl der Pixel im Pixelblock ist und den Pixelblock enthält, so dass der Suchbereich einen oder mehrere Kandidatenblock(blöcke) enthält, wobei jeder Kandidatenblock geometrisch identisch mit dem Pixelblock ist, so dass der Kandidatenblock nur durch Translation geometrisch mit dem Pixelblock übereinstimmen kann, wobei der Pixelblock selbst auch ein Kandidatenblock ist;
f2) Ausführen für jeden Kandidatenblock in Bezug auf den Pixelblock einen Bewertungsvorgang mit den folgenden Schritten:
i) Lesen, für jedes Pixel des Kandidatenblocks, eines zuvor kumulierten Pixelwerts und einer vorherigen Intervallzahl;
ii) Bestimmen, für jedes Pixel des Pixelblocks und ein entsprechendes Pixel des Kandidatenblocks, mindestens eines Kontrast-Schwellenwerts und/oder mindestens eines Differenz-Schwellenwerts basierend auf dem kumulierten Pixelwert des Pixels, des vorherigen kumulierten Pixelwerts des entsprechenden Pixels, der Intervallzahl des Pixels und/oder der vorherigen Intervallzahl des entsprechenden Pixels;
iii) Berechnen, für jedes Pixel des Pixelblocks und ein entsprechendes Pixel des Kandidatenblocks, einen, zwei oder drei der folgenden drei Werte: einen raumzeitlichen Kontrast, eine raumzeitliche Differenz und Kommunikationskosten, wobei die Kommunikationskosten basierend auf einer Datenmenge berechnet werden, die erforderlich ist, um ein Vergleichsergebnis eines Vergleichs des raumzeitlichen Kontrasts mit dem/den Kontrast-Schwellenwert(en) und/oder eines Vergleichs der raumzeitlichen Differenz mit dem/den Differenz-Schwellenwert(en) zu kodieren; und
iv) Berechnen eines Kostenfunktionsergebnisses für den Kandidatenblock basierend auf den raumzeitlichen Kontrasten, den raumzeitlichen Differenzen, den Kommunikationskosten und/oder einer Verschiebung zwischen dem Pixelblock und dem Kandidatenblock;
f3) Finden eines am besten passenden Blocks unter dem Kandidatenblock(blöcken) basierend auf dem Kostenfunktionsergebnis,
so dass der am besten passende Block der Kandidatenblock ist, der dem niedrigsten Kostenfunktionsergebnis zugeordnet ist; und
f4) Erzeugen eines Ereignisses der Ereignisdaten basierend auf der Verschiebung zwischen dem am besten passenden Block und dem Pixelblock und/oder den Vergleichsergebnissen, die dem am besten passenden Block zugeordnet sind.

2. Ereignissensor nach Anspruch 1, wobei der Ausleseprozessor konfiguriert ist, das Kostenfunktionsergebnis zu berechnen basierend auf:
- einer Summe/Mittelwert des absoluten/quadrierten Wertes des raumzeitlichen Kontrasts/Differenz zwischen jedem Pixel des Pixelblocks und einem entsprechenden Pixel des Kandidatenblocks;
- der Summe/Mittelwert der Kommunikationskosten, die jedem Pixel des Pixelblocks und einem entsprechenden Pixel des Kandidatenblocks zugeordnet sind;
- einer gewichtete Summe/Mittelwert des absoluten/quadrierten Werts des raumzeitlichen Kontrasts/Differenz zwischen jedem Pixel des Pixelblocks und einem entsprechenden Pixel des Kandidatenblocks, wobei der absolute/quadrierte Wert des raumzeitlichen Kontrasts/Differenz basierend auf den entsprechenden Kommunikationskosten gewichtet wird, die dem Pixel und dem entsprechenden Pixel zugeordnet sind; und/oder
- ob die Verschiebung zwischen dem Pixelblock und dem Kandidatenblock Null ist oder nicht.

3. Ereignissensor nach Anspruch 1 oder 2, wobei der Ausleseprozessor (4) so konfiguriert ist, den Auswertevorgang vorzeitig beendet, wenn ein perfekt passender Block gefunden wird, wobei ein Kostenfunktionsergebnis, das dem perfekt passenden Block zugeordnet ist, niedriger als ein vorbestimmter Schwellenwert ist.

4. Ereignissensor nach einem der vorhergehenden Ansprüche, wobei der Ausleseprozessor (4) konfiguriert ist, das Ereignis der Ereignisdaten zu erzeugen, wenn die Verschiebung zwischen dem am besten passenden Block und dem Pixelblock nicht Null ist oder die Vergleichsergebnisse, die dem am besten passenden Block zugeordnet sind, nicht alle Null sind.

5. Ereignissensor nach einem der vorhergehenden Ansprüche, wobei der Ausleseprozessor konfiguriert ist, den vorherigen kumulierten Pixelwert und die vorherige Intervallzahl basierend auf dem Ereignis, insbesondere für jedes Pixel des Pixelblocks, zu überschreiben:
i) unabhängig davon, ob die Verschiebung des Pixelblocks Null ist oder nicht, wenn das dem Pixel zugeordnete Vergleichsergebnis nicht Null ist, dann:
- Überschreiben des vorherigen kumulierten Pixelwerts des Pixels basierend auf dem vorherigen kumulierten Pixelwert des entsprechenden Pixels des am besten passenden Blocks und dem zugeordneten Vergleichsergebnis, und
- Überschreiben der vorherigen Intervallzahl des Pixels basierend auf der vorherigen Intervallzahl des entsprechenden Pixels des am besten passenden Blocks und dem zugehörigen Vergleichsergebnis;
ii) wenn die Verschiebung des Pixelblocks nicht Null ist und das dem Pixel zugeordnete Vergleichsergebnis Null ist, dann:
- Überschreiben des vorherigen kumulierten Pixelwerts des Pixels mit dem vorherigen kumulierten Pixelwert des entsprechenden Pixels des am besten passenden Blocks, und
- Überschreiben der vorherigen Intervallzahl des Pixels mit der vorherigen Intervallzahl des entsprechenden Pixels des am besten passenden Blocks;
iii) wenn die Verschiebung des Pixelblocks Null ist und wenn das dem Pixel zugeordnete Vergleichsergebnis Null ist, dann nicht Überschreiben des vorherigen kumulierten Pixelwerts und der vorherigen Intervallzahl des Pixels.

6. Ereignissensor, enthaltend ein Pixelarray (10) von Pixeln und konfiguriert zum Produzieren eines Datenstroms von Ereignisdaten als Reaktion auf Lichteinfall auf das Pixelarray (10), wobei die Pixel des Pixelarrays (10) in Pixelblöcke unterteilt sind, die jeweils zwei oder mehr Pixel des Pixelarrays (10) enthalten, wobei der Ereignissensor enthält:
- für jedes Pixel des Pixelarrays (10) mindestens einen Photodetektor (1), der konfiguriert ist, ein Detektorsignal als Reaktion auf auf das Pixel einfallendes Licht zu produzieren;
- für jedes Pixel oder eine Gruppe der Pixel einen Signalwandler (2), der mit dem Photodetektor (1) verbunden und konfiguriert ist, wiederholt Abtastwerte in Abhängigkeit von dem Detektorsignal zu produzieren und zu speichern, das in Abtastintervallen abgetastet wird; und
- einen Ausleseprozessor (4), der mit dem Signalwandler (2) verbunden und konfiguriert ist, die folgenden Schritte auf jedem Pixelblock auszuführen:
a) Ableiten, für jedes Pixel des Pixelblocks, eines kumulierten Pixelwerts basierend auf einem oder mehreren der Abtastwerte, wobei der kumulierte Pixelwert einer Kumulation des Detektorsignals über eine Intervallzahl der Abtastintervalle entspricht;
b) Ableiten eines kumulierten Blockwerts basierend auf den kumulierten Pixelwerten der Pixel im Pixelblock;
c) Ausführen der folgenden Schritte d), g1), g2), g3) und g4) unter der Bedingung, dass der kumulierte Blockwert einen kumulierten Blockwert-Schwellenwert überschreitet und/oder die Intervallzahl einen Zahl-Schwellenwert überschreitet:
d) Bestimmen eines kumulierten Blockwert-Schwellenwerts und/oder eines Zahl-Schwellenwerts für eine nachfolgende Kumulation;
g1) Lesen für jedes Pixel des Pixelblocks eines vorherigen kumulierten Pixelwerts und einer vorherigen Intervallzahl;
g2) Bestimmen für jedes Pixel des Pixelblocks mindestens eines Kontrast-Schwellenwerts, mindestens eines Differenz-Schwellenwerts und/oder mindestens eines Intensität-Schwellenwerts basierend auf dem kumulierten Pixelwert, dem vorherigen kumulierten Pixelwert, der Intervallzahl und/oder der vorherigen Intervallzahl des Pixels;
g3) Berechnen eines raumzeitlichen Kontrasts, einer raumzeitlichen Differenz, eines Intensitätswerts und/oder von Kommunikationskosten für jedes Pixel des Pixelblocks; und
g4) Erzeugen eines Ereignisses der Ereignisdaten basierend auf Vergleichsergebnissen eines Vergleichs des raumzeitlichen Kontrasts jedes Pixels des Pixelblocks mit dem Kontrast-Schwellenwert(en), eines Vergleichs der raumzeitlichen Differenz jedes Pixels des Pixelblocks mit dem Differenz-Schwellenwert(en) und/oder eines Vergleichs des Intensitätswerts jedes Pixels des Pixelblocks mit dem Intensitätswert-Schwellenwert(en).

7. Ereignissensor nach Anspruch 6, wobei der Ausleseprozessor konfiguriert ist, das Ereignis der Ereignisdaten zu erzeugen, wenn die Vergleichsergebnisse des Pixelblocks nicht alle Null sind.

8. Ereignissensor nach Anspruch 6 oder 7, wobei der Ausleseprozessor konfiguriert ist, bei Erzeugung des Ereignisses für jedes Pixel des Pixelblocks den vorherigen kumulierten Pixelwert und die vorherige Intervallzahl basierend auf dem Ereignis, d. h. basierend auf den Vergleichsergebnissen des Pixelblocks, zu überschreiben, insbesondere:
i) wenn das dem Pixel zugeordnete Vergleichsergebnis nicht Null ist, dann:
- Überschreiben des vorherigen kumulierten Pixelwerts des Pixels basierend auf dem vorherigen kumulierten Pixelwert selbst und dem zugeordneten Vergleichsergebnis, und
- Überschreiben der vorherigen Intervallzahl des Pixels basierend auf der vorherigen Intervallzahl selbst und dem zugeordneten Vergleichsergebnis;
ii) wenn das dem Pixel zugeordnete Vergleichsergebnis Null ist, dann nicht Überschreiben des vorherigen kumulierten Pixelwerts und der vorherigen Intervallzahl des Pixels.

9. Ereignissensor nach einem der vorhergehenden Ansprüche, wobei der Ausleseprozessor (4) konfiguriert ist:
- für jeden Pixelblock ein Modusvergleichsergebnis unter den Vergleichsergebnissen der Pixel im Pixelblock zu finden;
- für jeden Pixelblock Ausreißer-Vergleichsergebnis(se) zu finden, das sich vom Modus-Vergleichsergebnis unterscheidet(n); und
- das Ereignis der Ereignisdaten basierend auf dem Modusvergleichsergebnis und/oder dem Ausreißervergleichsergebnis(sen) zu erzeugen.

10. Ereignissensor nach Anspruch 9, wobei der Ausleseprozessor (4) konfiguriert ist, das Modusvergleichsergebnis zu finden basierend auf:
- einer Häufigkeit eines Auftretens des Vergleichsergebnisses(n), das einen gemeinsamen Wert aufweist(en); und/oder
- eine gewichtete Häufigkeit eines Auftretens des Vergleichsergebnisses(der Vergleichsergebnisse), das einen gemeinsamen Wert aufweist(en), wobei die gewichtete Häufigkeit des Auftretens basierend auf entsprechenden Kommunikationskosten gewichtet wird, die erforderlich sind, um das Vergleichsergebnis mit dem gemeinsamen Wert zu kodieren.

11. Ereignissensor nach einem der vorhergehenden Ansprüche, wobei der Ausleseprozessor (4) konfiguriert ist, das Vergleichsergebnis, das dem raumzeitlichen Kontrast/der räumlichen Differenz zugeordnet ist, zu spezifizieren, zu sein:
- Null, wenn der raumzeitliche Kontrast den Kontrast-Schwellenwert(e) nicht überschreitet und/oder die raumzeitliche Differenz den Differenz-Schwellenwert(e) nicht überschreitet;
- einen Teil zu enthalten, der linear von dem raumzeitlichen Kontrast und/oder der raumzeitlichen Differenz abhängig oder gleich diesem ist, wenn der raumzeitliche Kontrast den Kontrast-Schwellenwert(e) überschreitet und/oder die raumzeitliche Differenz den Differenz-Schwellenwert(e) überschreitet, und wenn der raumzeitliche Kontrast innerhalb eines Kontrastbereichs/-grenze ist und/oder die raumzeitliche Differenz innerhalb eines Differenzbereichs/-grenze ist;
- einen Teil zu enthalten, der linear vom Teilungsergebnis des Pixels (des Pixelblocks) abhängig oder gleich diesem ist, wenn der raumzeitliche Kontrast den Kontrastbereich/-grenze überschreitet und/oder die raumzeitliche Differenz den Differenzbereich/-grenze überschreitet.

12. Ereignissensor nach einem der vorhergehenden Ansprüche, wobei der Ausleseprozessor (4) konfiguriert ist, den Teil des Vergleichsergebnisses zu quantisieren, der linear von dem raumzeitlichen Kontrast und/oder der raumzeitlichen Differenz abhängig oder gleich diesem ist, und den Teil mit einer kleineren Anzahl von Bits oder einer kleineren Anzahl von Datenpaketen als den Teil des Vergleichsergebnisses, der linear von dem Divisionsergebnis abhängig oder gleich diesem ist des Pixels, zu kodieren.

13. Ereignissensor nach einem der vorhergehenden Ansprüche, wobei der Ausleseprozessor (4) konfiguriert ist, wenn das Vergleichsergebnis den Teil enthält, der linear von der raumzeitlichen Differenz abhängig oder gleich dieser ist, den Teil des Vergleichsergebnisses mit einer Schrittweite zu quantisieren, die annähernd proportional zu dem vorherigen Divisionsergebnis des Pixels oder dem vorherigen Divisionsergebnis des entsprechenden Pixels des am besten passenden Blocks ist.

14. Ereignissensor nach einem der vorhergehenden Ansprüche, wobei der Ausleseprozessor (4) konfiguriert ist, wenn das Vergleichsergebnis den Teil enthält, der linear von dem Teilungsergebnis des Pixels abhängig oder gleich diesem ist, das Divisionsergebnis und/oder den Teil des Vergleichsergebnisses in einem Floating-point-Format zu codieren.

15. Ereignissensor nach einem der vorhergehenden Ansprüche, wobei der Ausleseprozessor (4) konfiguriert ist, den Zahl-Schwellenwert als eine Exponentiation einer konstanten Basis zu einer variablen Leistung zu bestimmen, so dass der Significand des Divisionsergebnisses im Floating-Point-Format auf dem kumulierten Pixelwert basiert, während der Exponent des Divisionsergebnisses auf dem Gegenteil der variablen Leistung basiert.

16. Verfahren zum Produzieren eines Datenstroms von Ereignisdaten als Reaktion auf Lichteinfall auf ein Pixelarray (10) von Pixeln, wobei die Pixel des Pixelarrays (10) in Pixelblöcke unterteilt sind, die jeweils zwei oder mehr Pixel des Pixelarrays (10) enthalten, wobei das Verfahren die folgenden Schritte enthält, die für jedes Pixel oder eine Gruppe der Pixel durchgeführt werden:
- Produzieren eines Detektorsignals als Reaktion auf Licht, das auf das Pixel einfällt;
- wiederholtes Produzieren und Speichern von Abtastwerten in Abhängigkeit von dem Detektorsignal, das in Abtastintervallen abgetastet wird;
a) Ableiten für jedes Pixel des Pixelblocks eines kumulierten Pixelwerts basierend auf einem oder mehreren der Abtastwerte, wobei der kumulierte Pixelwert einer Kumulation des Detektorsignals über eine Intervallzahl der Abtastintervalle entspricht;
b) Ableiten eines kumulierten Blockwerts basierend auf den kumulierten Pixelwerten der Pixel im Pixelblock;
c) Ausführen der folgenden Schritte d), f1), f2), f3) und f4) unter der Bedingung, dass der kumulierte Blockwert einen kumulierten Blockwert-Schwellenwert überschreitet und/oder die Intervallzahl einen Zahl-Schwellenwert überschreitet:
d) Bestimmen eines kumulierten Blockwert-Schwellenwerts und/oder eines Zahl-Schwellenwerts für eine nachfolgende Kumulation;
f1) Definieren eines Suchbereichs, der eine Anzahl von Pixeln enthält, die gleich oder größer als die Anzahl der Pixel im Pixelblock ist und den Pixelblock enthält, so dass der Suchbereich einen oder mehrere Kandidatenblock(blöcke) enthält, wobei jeder Kandidatenblock geometrisch identisch mit dem Pixelblock ist, so dass der Kandidatenblock nur durch Translation geometrisch mit dem Pixelblock übereinstimmen kann, wobei der Pixelblock selbst auch ein Kandidatenblock ist;
f2) Ausführen für jeden Kandidatenblock in Bezug auf den Pixelblock einen Bewertungsvorgang mit den folgenden Schritten:
i) Lesen, für jedes Pixel des Kandidatenblocks, eines zuvor kumulierten Pixelwerts und einer vorherigen Intervallzahl;
ii) Bestimmen, für jedes Pixel des Pixelblocks und ein entsprechendes Pixel des Kandidatenblocks, mindestens eines Kontrast-Schwellenwerts und/oder mindestens eines Differenz-Schwellenwerts basierend auf dem kumulierten Pixelwert des Pixels, dem vorherigen kumulierten Pixelwert des entsprechenden Pixels, der Intervallzahl des Pixels und/oder der vorherigen Intervallzahl des entsprechenden Pixels;
iii) Berechnen, für jedes Pixel des Pixelblocks und ein entsprechendes Pixel des Kandidatenblocks, einen, zwei oder drei der folgenden drei Werte: einen raumzeitlichen Kontrast, eine raumzeitliche Differenz und Kommunikationskosten, wobei die Kommunikationskosten basierend auf einer Datenmenge berechnet werden, die erforderlich ist, um ein Vergleichsergebnis eines Vergleichs des raumzeitlichen Kontrasts mit dem/den Kontrast-Schwellenwert(en) und/oder eines Vergleichs der raumzeitlichen Differenz mit dem/den Differenz-Schwellenwert(en) zu kodieren; und
iv) Berechnen eines Kostenfunktionsergebnisses für den Kandidatenblock basierend auf den raumzeitlichen Kontrasten, den raumzeitlichen Differenzen, den Kommunikationskosten und/oder einer Verschiebung zwischen dem Pixelblock und dem Kandidatenblock;
f3) Finden eines am besten passenden Blocks unter dem Kandidatenblock(blöcken) basierend auf dem Kostenfunktionsergebnis,
so dass der am besten passende Block der Kandidatenblock ist, der dem niedrigsten Kostenfunktionsergebnis zugeordnet ist; und
f4) Erzeugen eines Ereignisses der Ereignisdaten basierend auf der Verschiebung zwischen dem am besten passenden Block und dem Pixelblock und/oder den Vergleichsergebnissen, die dem am besten passenden Block zugeordnet sind.

17. Verfahren zum Produzieren eines Datenstroms von Ereignisdaten als Reaktion auf Lichteinfall auf ein Pixelarray (10) von Pixeln, wobei die Pixel des Pixelarrays (10) in Pixelblöcke unterteilt sind, die jeweils zwei oder mehr Pixel des Pixelarrays (10) enthalten, wobei das Verfahren die folgenden Schritte enthält, die für jedes Pixel oder eine Gruppe der Pixel ausgeführt werden:
- Produzieren eines Detektorsignals als Reaktion auf Licht, das auf das Pixel einfällt;
- wiederholtes Produzieren und Speichern von Abtastwerten in Abhängigkeit von dem Detektorsignal, das in Abtastintervallen abgetastet wird;
a) Ableiten, für jedes Pixel des Pixelblocks, eines kumulierten Pixelwerts basierend auf einem oder mehreren der Abtastwerte, wobei der kumulierte Pixelwert einer Kumulation des Detektorsignals über eine Intervallzahl der Abtastintervalle entspricht;
b) Ableiten eines kumulierten Blockwerts basierend auf den kumulierten Pixelwerten der Pixel im Pixelblock;
c) Ausführen der folgenden Schritte d), g1), g2), g3) und g4) unter der Bedingung, dass der kumulierte Blockwert einen kumulierten Blockwert-Schwellenwert überschreitet und/oder die Intervallzahl einen Zahl-Schwellenwert überschreitet:
d) Bestimmen eines kumulierten Blockwert-Schwellenwerts und/oder eines Zahl-Schwellenwerts für eine nachfolgende Kumulation;
g1) Lesen, für jedes Pixel des Pixelblocks, eines vorherigen kumulierten Pixelwerts und einer vorherigen Intervallzahl;
g2) Bestimmen, für jedes Pixel des Pixelblocks, mindestens eines Kontrast-Schwellenwerts, mindestens eines Differenz-Schwellenwerts und/oder mindestens eines Intensität-Schwellenwerts basierend auf dem kumulierten Pixelwert, dem vorherigen kumulierten Pixelwert, der Intervallzahl und/oder der vorherigen Intervallzahl des Pixels;
g3) Berechnen eines raumzeitlichen Kontrasts, einer raumzeitlichen Differenz, eines Intensitätswerts und/oder von Kommunikationskosten für jedes Pixel des Pixelblocks; und
g4) Erzeugen eines Ereignisses der Ereignisdaten basierend auf Vergleichsergebnissen eines Vergleichs des raumzeitlichen Kontrasts jedes Pixels des Pixelblocks mit dem Kontrast-Schwellenwert(en), eines Vergleichs der raumzeitlichen Differenz jedes Pixels des Pixelblocks mit dem Differenz-Schwellenwert(en) und/oder eines Vergleichs des Intensitätswerts jedes Pixels des Pixelblocks mit dem Intensitätswert-Schwellenwert(en).

## Revendications

1. Un capteur d'événement comprenant un réseau de pixels (10) de pixels et configuré pour produire un flux de données d'événement en réaction à la lumière incidente sur ledit réseau de pixels (10), dans lequel les pixels du réseau de pixels (10) sont divisés en blocs de pixels, chacun comprenant deux ou plusieurs pixels du réseau de pixels (10), le capteur d'événement comprenant :
- pour chaque pixel dudit réseau de pixels (10), au moins un photodétecteur (1) configuré pour produire un signal de détecteur en réaction à la lumière incidente sur ledit pixel ;
- pour chaque pixel ou un groupe de ces pixels, un convertisseur de signal (2) connecté audit photodétecteur (1) et configuré pour produire et stocker de manière répétée des valeurs d'échantillonnage dépendant dudit signal de détecteur échantillonné à des intervalles d'échantillonnage ;
- un processeur de lecture (4) connecté audit convertisseur de signal (2) et configuré pour effectuer les étapes suivantes sur chaque bloc de pixels :
a) dériver, pour chaque pixel du bloc de pixels, une valeur de pixel accumulée basée sur une ou plusieurs desdites valeurs d'échantillonnage, ladite valeur de pixel accumulée correspondant à une accumulation dudit signal de détecteur sur un comptage d'intervalles desdits intervalles d'échantillonnage ;
b) dériver une valeur de bloc accumulée en fonction des valeurs de pixels accumulées des pixels du bloc de pixels ;
c) effectuer les étapes suivantes d), f1), f2), f3) et f4) à condition que la valeur de bloc accumulée dépasse un seuil de valeur de bloc accumulé et/ou que le comptage d'intervalles dépasse un seuil de comptage :
d) déterminer un seuil de valeur de bloc accumulé et/ou un seuil de comptage pour une accumulation ultérieure ;
f1) définir une région de recherche comportant un nombre de pixels égal ou supérieur au nombre de pixels du bloc de pixels et comprenant le bloc de pixels, de sorte que la région de recherche contienne un ou plusieurs blocs candidats, dans lequel chaque bloc candidat est géométriquement identique au bloc de pixels de sorte que le bloc candidat puisse coïncider géométriquement avec le bloc de pixels par translation uniquement, le bloc de pixels lui-même étant également un bloc candidat ;
f2) effectuer pour chaque bloc candidat, par rapport au bloc de pixels, une procédure d'évaluation comportant les étapes suivantes :
i) pour chaque pixel du bloc candidat, lire une valeur de pixel accumulée précédente et un comptage d'intervalles précédent ;
ii) pour chaque pixel du bloc de pixels et un pixel correspondant du bloc candidat, déterminer au moins un seuil de contraste et/ou au moins un seuil de différence en fonction de la valeur de pixel accumulée du pixel, de la valeur de pixel accumulée précédente du pixel correspondant, du comptage d'intervalles du pixel et/ou du comptage d'intervalles précédent du pixel correspondant ;
iii) pour chaque pixel du bloc de pixels et un pixel correspondant du bloc candidat, calculer une, deux ou trois des trois valeurs suivantes : un contraste spatio-temporel, une différence spatio-temporelle et un coût de communication, dans lequel ledit coût de communication est calculé sur la base d'une quantité de données nécessaires pour coder un résultat de comparaison consistant à comparer ledit contraste spatio-temporel avec le(s) seuil(s) de contraste et/ou à comparer ladite différence spatio-temporelle avec le(s) seuil(s) de différence(s) ; et
iv) calculer le résultat d'une fonction de coût pour le bloc candidat sur la base desdits contrastes spatio-temporels, desdites différences spatio-temporelles, desdits coûts de communication et/ou d'un déplacement entre le bloc de pixels et le bloc candidat ;
f3) trouver un bloc le mieux adapté parmi le(s) bloc(s) candidat(s) en fonction du résultat de la fonction de coût, de sorte que le bloc le mieux adapté soit le bloc candidat associé au résultat de la fonction de coût le plus bas ; et
f4) générer un événement de ces données d'événement en fonction du déplacement entre le bloc le mieux adapté et le bloc de pixels et/ou des résultats de comparaison associés au bloc le mieux adapté.

2. Un capteur d'événement selon la revendication 1, dans lequel le processeur de lecture est configuré pour calculer ledit résultat de fonction de coût en fonction de :
- une somme/moyenne de la valeur absolue/carrée du contraste/différence spatio-temporel entre chaque pixel du bloc de pixels et un pixel correspondant du bloc candidat ;
- la somme/moyenne du coût de communication associé à chaque pixel du bloc de pixels et à un pixel correspondant du bloc candidat ;
- une somme/moyenne pondérée de la valeur absolue/carrée du contraste/différence spatio-temporel entre chaque pixel du bloc de pixels et un pixel correspondant du bloc candidat, dans lequel la valeur absolue/carrée du contraste/différence spatio-temporel est pondérée en fonction du coût de communication correspondant associé au pixel et au pixel correspondant ; et/ou
- si le déplacement entre le bloc de pixels et le bloc candidat est nul ou non.

3. Un capteur d'événements selon la revendication 1 ou 2, dans lequel ledit processeur de lecture (4) est configuré pour mettre fin à la procédure d'évaluation tôt lorsqu'un bloc adapté parfaitement est trouvé, dans lequel un résultat de fonction de coût associé au bloc adapté parfaitement est inférieur à un seuil prédéterminé.

4. Un capteur d'événement selon l'une des revendications précédentes, dans lequel le processeur de lecture (4) est configuré pour générer ledit événement desdites données d'événement si le déplacement entre le bloc le mieux adapté et le bloc de pixels n'est pas nul ou si les résultats de comparaison associés au bloc le mieux adapté ne sont pas tous nuls.

5. Un capteur d'événement selon l'une des revendications précédentes, dans lequel ledit processeur de lecture est configuré pour écraser ladite valeur de pixel accumulée précédente et ledit comptage d'intervalles précédent en fonction dudit événement, spécifiquement, pour chaque pixel du bloc de pixels :
i) que le déplacement du bloc de pixels soit nul ou non, si le résultat de la comparaison associé au pixel n'est pas nul, alors :
- écraser la valeur de pixel accumulée précédente du pixel en fonction de la valeur de pixel accumulée précédente du pixel correspondant du bloc le mieux adapté et du résultat de comparaison associé, et
- écraser le comptage d'intervalle précédent du pixel en fonction du comptage d'intervalle précédent du pixel correspondant du bloc le mieux adapté et du résultat de comparaison associé ;
ii) si le déplacement du bloc de pixels n'est pas nul et si le résultat de la comparaison associé au pixel est nul, alors :
- écraser la valeur de pixel accumulée précédente du pixel par la valeur de pixel accumulée précédente du pixel correspondant du bloc le mieux adapté , et
- écraser le comptage d'intervalles précédent du pixel par le comptage d'intervalles précédent du pixel correspondant du bloc le mieux adapté ;
iii) si le déplacement du bloc de pixels est égal à zéro et si le résultat de la comparaison associé au pixel est nul, n'écraser pas la valeur de pixel accumulée précédente et le comptage d'intervalles précédents du pixel.

6. Un capteur d'événement comprenant un réseau de pixels (10) de pixels et configuré pour produire un flux de données d'événement en réaction à la lumière incidente sur ledit réseau de pixels (10), dans lequel les pixels du réseau de pixels (10) sont divisés en blocs de pixels, chacun comprenant deux ou plusieurs pixels du réseau de pixels (10), le capteur d'événement comprenant :
- pour chaque pixel dudit réseau de pixels (10), au moins un photodétecteur (1) configuré pour produire un signal de détecteur en réaction à la lumière incidente sur ledit pixel ;
- pour chaque pixel ou un groupe de ces pixels, un convertisseur de signal (2) connecté audit photodétecteur (1) et configuré pour produire et stocker de manière répétée des valeurs d'échantillonnage dépendant dudit signal de détecteur échantillonné à des intervalles d'échantillonnage ; et
- un processeur de lecture (4) connecté audit convertisseur de signal (2) et configuré pour effectuer les étapes suivantes sur chaque bloc de pixels :
a) dériver, pour chaque pixel du bloc de pixels, une valeur de pixel accumulée sur la base d'une ou plusieurs desdites valeurs d'échantillonnage, ladite valeur de pixel accumulée correspondant à une accumulation dudit signal de détecteur sur un comptage d'intervalle desdits intervalles d'échantillonnage ;
b) dériver une valeur de bloc accumulée en fonction des valeurs de pixels accumulées des pixels du bloc de pixels ;
c) effectuer les étapes suivantes d), g1), g2), g3) et g4) à condition que la valeur de bloc accumulée dépasse un seuil de valeur de bloc accumulé et/ou que le comptage d'intervalles dépasse un seuil de comptage :
d) déterminer un seuil de valeur de bloc accumulé et/ou un seuil de comptage pour une accumulation ultérieure ;
g1) pour chaque pixel du bloc de pixels, lire une valeur de pixel accumulée précédente et un comptage d'intervalles précédent ;
g2) pour chaque pixel du bloc de pixels, déterminer au moins un seuil de contraste, au moins un seuil de différence et/ou au moins un seuil de valeur d'intensité en fonction de la valeur de pixel accumulée, de la valeur de pixel accumulée précédente, du comptage d'intervalles et/ou du comptage d'intervalles précédent du pixel ;
g3) calculer un contraste spatio-temporel, une différence spatio-temporelle, une valeur d'intensité et/ou un coût de communication pour chaque pixel du bloc de pixels ; et
g4) générer un événement desdites données d'événement sur la base de résultats de comparaison consistant à comparer ledit contraste spatio-temporel de chaque pixel du bloc de pixels par rapport audit seuil(s) de contraste, à comparer ladite différence spatio-temporelle de chaque pixel du bloc de pixels par rapport audit seuil(s) de différence et/ou à comparer ladite valeur d'intensité de chaque pixel du bloc de pixels par rapport auxdits seuils de valeur d'intensité.

7. Un capteur d'événement selon la revendication 6, dans lequel le processeur de lecture est configuré pour générer l'événement des données d'événement si les résultats de comparaison du bloc de pixels ne sont pas tous nuls.

8. Un capteur d'événement selon la revendication 6 ou 7, dans lequel le processeur de lecture est configuré pour écraser, lors de la génération de l'événement, pour chaque pixel du bloc de pixels, la valeur de pixel accumulée précédente et le comptage d'intervalles précédent en fonction de l'événement, c'est-à-dire sur la base des résultats de comparaison du bloc de pixels, en particulier :
i) si le résultat de la comparaison associé au pixel n'est pas nul, alors :
- écraser la valeur de pixel accumulée précédente du pixel en fonction de la valeur de pixel accumulée précédente elle-même et du résultat de comparaison associé, et
- écraser le comptage d'intervalles précédent du pixel en fonction du comptage d'intervalles précédent lui-même et du résultat de comparaison associé ;
ii) si le résultat de la comparaison associé au pixel est égal à zéro, n' écraser pas la valeur de pixel accumulée précédente et le comptage d'intervalles précédent du pixel.

9. Un capteur d'événements selon l'une des revendications précédentes, dans lequel le processeur de lecture (4) est configuré pour :
- pour chaque bloc de pixels, trouver un résultat de comparaison de mode parmi les résultats de comparaison des pixels du bloc de pixels ;
- pour chaque bloc de pixels, trouver le résultat(s) de comparaison de valeurs aberrantes qui diffère(nt) du résultat de la comparaison de mode ; et
- générer ledit événement desdites données d'événement sur la base du résultat de la comparaison de mode et/ou du ou des résultats de comparaison aberrants.

10. Un capteur d'événements selon la revendication 9, dans lequel le processeur de lecture (4) est configuré pour trouver ledit résultat de comparaison de mode sur la base de :
- une fréquence d'occurrence du résultat(s) de comparaison qui partage(nt) une valeur commune ; et/ou
- une fréquence pondérée d'occurrence du résultat(s) de comparaison qui partage(nt) une valeur commune, dans lequel la fréquence pondérée d'occurrence est pondérée en fonction du coût de communication correspondant nécessaire pour coder le résultat de la comparaison avec ladite valeur commune.

11. Un capteur d'événement selon l'une des revendications précédentes, dans lequel le processeur de lecture (4) est configuré pour spécifier que le résultat de comparaison associé audit contraste/différence spatio-temporel est :
- zéro, si ledit contraste spatio-temporel ne dépasse pas le seuil(s) de contraste et/ou si ladite différence spatio-temporelle ne dépasse pas le seuil(s) de différence ;
- contient une partie qui dépend linéairement dudit contraste spatio-temporel et/ou de ladite différence spatio-temporelle, si ledit contraste spatio-temporel dépasse le seuil(s) de contraste et/ou que ladite différence spatio-temporelle dépasse le seuil(s) de différence, et si ledit contraste spatio-temporel est dans une plage/limite de contraste et/ou si ladite différence spatio-temporelle est dans une plage/limite de différence ;
- contient une partie qui dépend linéairement ou est égale au résultat de la division du pixel (du bloc de pixels), si ledit contraste spatio-temporel dépasse la plage/limite de contraste et/ou si ladite différence spatio-temporelle dépasse la plage/limite de différence.

12. Un capteur d'événement selon l'une des revendications précédentes, dans lequel le processeur de lecture (4) est configuré pour quantifier la partie du résultat de la comparaison qui dépend linéairement dudit contraste spatio-temporel et/ou de ladite différence spatio-temporelle ou est égale à celle-ci et encoder ladite partie avec un nombre de bits ou un nombre de paquets de données plus petit que la partie du résultat de la comparaison qui dépend linéairement du résultat de la division ou qui est égale à celui-ci du pixel.

13. Un capteur d'événement selon l'une des revendications précédentes, dans lequel le processeur de lecture (4) est configuré pour, lorsque le résultat de la comparaison contient la partie qui dépend linéairement de ladite différence spatio-temporelle ou est égale à celle-ci, quantifier ladite partie du résultat de la comparaison avec une taille de pas approximativement proportionnelle au résultat de la division précédente du pixel ou au résultat de la division précédente du pixel correspondant du bloc le mieux adapté.

14. Un capteur d'événement selon l'une des revendications précédentes, dans lequel le processeur de lecture (4) est configuré pour, lorsque le résultat de la comparaison contient la partie qui dépend linéairement du résultat de division du pixel ou est égale à celui-ci, coder le résultat de la division et/ou ladite partie du résultat de la comparaison dans un format à virgule flottante.

15. Un capteur d'événement selon l'une des revendications précédentes, dans lequel le processeur de lecture (4) est configuré pour déterminer ledit seuil de comptage comme une exponentiation d'une base constante à une puissance variable, de sorte que la signification du résultat de division dans le format à virgule flottante est basée sur la valeur de pixel accumulée, tandis que l'exposant du résultat de division est basé sur l'opposé de ladite puissance variable.

16. Un procédé de production d'un flux de données d'événements en réaction à une lumière incidente sur un réseau de pixels (10) de pixels, dans lequel les pixels du réseau de pixels (10) sont divisés en blocs de pixels, chacun comprenant deux pixels ou plus du réseau de pixels (10), le procédé comprenant les étapes suivantes exécutées pour chaque pixel ou un groupe desdits pixels :
- produire un signal de détecteur en réaction à la lumière incidente sur ledit pixel ;
- produire et stocker de manière répétée des valeurs d'échantillonnage dépendant dudit signal de détecteur échantillonné à des intervalles d'échantillonnage ;
a) dériver, pour chaque pixel du bloc de pixels, une valeur de pixel accumulée basée sur une ou plusieurs desdites valeurs d'échantillonnage, ladite valeur de pixel accumulée correspondant à une accumulation dudit signal de détecteur sur un comptage d'intervalle desdits intervalles d'échantillonnage ;
b) dériver une valeur de bloc accumulée en fonction des valeurs de pixels accumulées des pixels du bloc de pixels ;
c) effectuer les étapes suivantes d), f1), f2), f3) et f4) à condition que la valeur de bloc accumulée dépasse un seuil de valeur de bloc accumulé et/ou que le comptage d'intervalles dépasse un seuil de comptage :
d) déterminer un seuil de valeur de bloc accumulé et/ou un seuil de comptage pour une accumulation ultérieure ;
f1) définir une région de recherche comportant un nombre de pixels égal ou supérieur au nombre de pixels du bloc de pixels et comprenant le bloc de pixels, de sorte que la région de recherche contienne un ou plusieurs blocs candidats, dans lequel chaque bloc candidat est géométriquement identique au bloc de pixels de sorte que le bloc candidat puisse coïncider géométriquement avec le bloc de pixels par translation uniquement, le bloc de pixels lui-même étant également un bloc candidat ;
f2) effectuer pour chaque bloc candidat, par rapport au bloc de pixels, une procédure d'évaluation comportant les étapes suivantes :
i) pour chaque pixel du bloc candidat, lire une valeur de pixel accumulée précédente et un comptage d'intervalles précédent ;
ii) pour chaque pixel du bloc de pixels et un pixel correspondant du bloc candidat, déterminer au moins un seuil de contraste et/ou au moins un seuil de différence en fonction de la valeur de pixel accumulée du pixel, de la valeur de pixel accumulée précédente du pixel correspondant, du comptage d'intervalles du pixel et/ou du comptage d'intervalles précédent du pixel correspondant ;
iii) pour chaque pixel du bloc de pixels et un pixel correspondant du bloc candidat, calculer une, deux ou trois des trois valeurs suivantes : un contraste spatio-temporel, une différence spatio-temporelle et un coût de communication, dans lequel ledit coût de communication est calculé sur la base d'une quantité de données nécessaires pour coder un résultat de comparaison consistant à comparer ledit contraste spatio-temporel avec le seuil(s) de contraste et/ou à comparer ladite différence spatio-temporelle avec le seuil(s) de différence ; et
iv) calculer le résultat d'une fonction de coût pour le bloc candidat sur la base desdits contrastes spatio-temporels, desdites différences spatio-temporelles, desdits coûts de communication et/ou d'un déplacement entre le bloc de pixels et le bloc candidat ;
f3) trouver un bloc le mieux adapté parmi le(s) bloc(s) candidat(s) en fonction du résultat de la fonction de coût, de sorte que le bloc le mieux adapté soit le bloc candidat associé au résultat de la fonction de coût le plus bas ; et
f4) générer un événement de ces données d'événement en fonction du déplacement entre le bloc le mieux adapté et le bloc de pixels et/ou des résultats de comparaison associés au bloc le mieux adapté.

17. Un procédé de production d'un flux de données d'événements en réaction à une lumière incidente sur un réseau de pixels (10) de pixels, dans lequel les pixels du réseau de pixels (10) sont divisés en blocs de pixels, chacun comprenant deux pixels ou plus du réseau de pixels (10), le procédé comprenant les étapes suivantes exécutées pour chaque pixel ou un groupe desdits pixels :
- produire un signal de détecteur en réaction à la lumière incidente sur ledit pixel ;
- produire et stocker de manière répétée des valeurs d'échantillonnage dépendant dudit signal de détecteur échantillonné à des intervalles d'échantillonnage ;
a) dériver, pour chaque pixel du bloc de pixels, une valeur de pixel accumulée sur la base d'une ou plusieurs desdites valeurs d'échantillonnage, ladite valeur de pixel accumulée correspondant à une accumulation dudit signal de détecteur sur un comptage d'intervalle desdits intervalles d'échantillonnage ;
b) dériver une valeur de bloc accumulée en fonction des valeurs de pixels accumulées des pixels du bloc de pixels ;
c) effectuer les étapes suivantes d), g1), g2), g3) et g4) à condition que la valeur de bloc accumulée dépasse un seuil de valeur de bloc accumulé et/ou que le comptage d'intervalles dépasse un seuil de comptage :
d) déterminer un seuil de valeur de bloc accumulé et/ou un seuil de comptage pour une accumulation ultérieure ;
g1) pour chaque pixel du bloc de pixels, lire une valeur de pixel accumulée précédente et un comptage d'intervalles précédent ;
g2) pour chaque pixel du bloc de pixels, déterminer au moins un seuil de contraste, au moins un seuil de différence et/ou au moins un seuil de valeur d'intensité en fonction de la valeur de pixel accumulée, de la valeur de pixel accumulée précédente, du comptage d'intervalles et/ou du comptage d'intervalles précédent du pixel ;
g3) calculer un contraste spatio-temporel, une différence spatio-temporelle, une valeur d'intensité et/ou un coût de communication pour chaque pixel du bloc de pixels ; et
g4) générer un événement desdites données d'événement sur la base de résultats de comparaison consistant à comparer ledit contraste spatio-temporel de chaque pixel du bloc de pixels par rapport audit seuil(s) de contraste, à comparer ladite différence spatio-temporelle de chaque pixel du bloc de pixels par rapport audit seuil(s) de différence et/ou à comparer ladite valeur d'intensité de chaque pixel du bloc de pixels par rapport audit seuil(s) de valeur d'intensité.
